# EUROPEAN PATENT SPECIFICATION

(11) **EP 4 075 739 B1**
(45) Date of publication and mention of the grant of the patent: **13.03.2024**
(21) Application number: 20899705.6
(22) Date of filing: 10.12.2020
(51) Int. Cl.: H04L 45/645, H04L 45/655, H04L 45/02, H04L 45/30, H04L 45/0377, H04L 45/76

(54) **SERVICE CHAIN FORWARDING CONTROL METHODS AND DEVICES**
VERFAHREN UND VORRICHTUNGEN ZUM STEUERN DER WEITERLEITUNG EINER DIENSTKETTE
PROCÉDÉS ET DISPOSITIFS DE COMMANDE DE TRANSMISSION DE CHAÎNE DE SERVICE

(30) Priority: 12.12.2019 CN 201911275906
(43) Date of publication of application: 19.10.2022
(73) Proprietor: ZTE Corporation, Shenzhen, Guangdong 518057 (CN)
(72) Inventor: XU, Duo, Shenzhen, Guangdong 518057 (CN)
(74) Representative: Mozzi, Matteo
(86) International application number: PCT/CN2020/135473
(87) International publication number: WO 2021/115397

(56) References cited:
- EP-A1- 3 382 955
- WO-A1-2017/195184
- CN-A- 104 954 274
- CN-A- 105 812 257
- CN-A- 106 921 579
- US-A1- 2012 120 950

## Description

### Technical Field

The present invention relates to the field of communications, and in particular, to a service chain forwarding control method and apparatus, and a service networking.

### Background

In networking scenarios such as data centers and telecom cloud infrastructure, service traffic often needs to pass through several service nodes outside normal second and third layers of forwarding paths, so as to meet corresponding special service processing requirements. Specifically, in a process of processing the above service traffic by means of a series of network service nodes, also known as service functions (Service Functions, SFs), the series of orderly SFs can be called a service chain (Service Chain, SC) or a service function chain (Service Function Chain, SFC). In order to realize various kinds of flexible service logic in a service flow processing process, it is necessary to realize the definability and programmability of the service chain, that is, the orchestration of the service chain. Generally speaking, an orchestration result of the service chain needs to be converted into a forwarding table entry on each relevant service function forwarders (Service Function Forwarders, SFFs) along a service flow forwarding route, and the above process is the forwarding control of the service chain.

In a related art, in order to realize that the service traffic is orchestrated according to the service chain to pass through several special service nodes in sequence, it is necessary to perform forwarding control on the service chain in a special forwarding manner, so as to break through an original forwarding path of the traffic and insert several way points. There are two commonly used forwarding control manners for the service chain:
An ACL traffic diversion manner: specifically, ACL redirection tables are issued to all SFFs along the service chain, and the traffic of the service chain is forwarded according to traffic features to ensure that the traffic passes through the orchestrated forwarding paths and service nodes.

A network service header (Network Service Header, NSH) is used to carry the service chain to which a message belongs and the current location of the message in the chain, and the forwarder forwards the network service header according to an NSH tag; specifically, at a starting point of the service chain, a service classifier (Service Classifier) identifies the traffic that needs to enter the service chain according to flow features, and inserts the NSH tag in a message header; each SFF along the way forwards the traffic to the next hop SF according to the NSH tag; the SF modifies the NSH after service processing to update the location of the traffic in the chain; and the SFF at an end point of the service chain pops the NSH of the message to restore the normal forwarding of the traffic.

The above forwarding control manners of the service chain are all implemented in traditional hardware networking, that is, a control plane corresponding to the forwarder is a local control plane. At present, a software defined network (SDN) technology has begun to be popularized in networking scenarios such as data centers and telecom cloud infrastructure. The SDN is a novel network innovation architecture, its core solution is to separate control and forwarding planes of the network so as to increase the flexibility and scalability of network management. The control plane in the SDN is extracted from control functions of network devices such as a switch and a router in the original hardware networking, and is implemented by independent and centrally deployed control software. Accordingly, the control function in one or more original local switches and routers is stripped from a local infrastructure layer, and the control plane of the SDN uniformly implements forwarding management. In the SDN, the forwarding control of the service chain is implemented by the control plane, by means of an OpenFlow protocol, by writing forwarding table entries such as a flow table and a group table into each switch in a forwarding plane, so as to complete the control of the entire network.

Due to the emergence of the SDN software networking architecture, the forwarding control manner of the service chain, which is suitable for the traditional hardware networking architecture, cannot be implemented in SDN software networking. Correspondingly, the forwarding control manner of the service chain for the SDN software networking architecture, that is, the forwarding manner by means of the OpenFlow protocol, cannot be implemented in hardware networking.

In view of the problem in the above related art that, forwarding control of the service chain cannot be implemented in a hybrid networking scenario, no effective solution has been proposed in the related art yet. Other service chain forwarding control methods are disclosed by the patent publications EP3382955A1 and WO2017/195184A1.

### Summary

The present invention is defined by the appended claims. The present invention provides service chain forwarding control methods and apparatuses, so as to at least solve the problem in the related art that service chain forwarding control cannot be implemented in a hybrid networking scenario.

According to an aspect of the present invention, a service chain forwarding control method is provided, which is applied to a first service function forwarder (SFF), wherein the first SFF is an SFF controlled by a local controller. The method includes: acquiring (S102) first service function, SF, information and second SF information, and generating a first forwarding table entry according to the first SF information and the second SF information; andperforming (S104) service chain forwarding control on the first SFF according to the first forwarding table entry,wherein the first SF information is used for indicating the information of an SF attached to the first SFF, and the second SF information is used for indicating the information of an SF attached to a second SFF; and the second SFF is an SFF controlled by a software defined network, SDN,controller;wherein the step of acquiring the first service function, SF, information and the second SF information further comprises:acquiring service chain configuration information sent by the SDN controller, so as to acquire the first SF information according to the service chain configuration information, wherein the service chain configuration information is generated by the SDN controller according to preset service chain orchestration information;wherein the step of acquiring the service chain configuration information sent by the SDN controller comprises:establishing a management connection between the SDN controller and the first SFF, so as to acquire the service chain configuration information issued by the SDN controller; or,establishing a routing neighbor between the SDN controller and the first SFF, so as to acquire, by means of the routing protocol, the service chain configuration information issued by the SDN controller; or,establishing a routing neighbor between the SDN controller and the routing reflector, andestablishing a routing neighbor between the first SFF and the routing reflector, so as to acquire, by means of the routing protocol, the service chain configuration information issued by the SDN controller.

According to another aspect of the present invention, a service chain forwarding control method is further provided, which is applied to a software defined network (SDN) controller. The method includes: acquiring (S202) first service function, SF, information and second SF information, and generating a second forwarding table entry according to the first SF information and the second SF information;andissuing (S204) the second forwarding table entry to a second service function forwarder, SFF, to perform service chain forwarding control,wherein the first SF information is used for indicating the information of an SF attached to a first SFF,and the second SF information is used for indicating the information of an SF attached to the second SFF; and the first SFF is an SFF controlled by a local controller, and the second SFF is an SFF controlled by a software defined network (SDN) controller;wherein the step of acquiring (S202) the first SF information and the second SF information comprises:acquiring, by means of a routing protocol, the first SF information published by the first SFF;wherein the step of acquiring, by means of the routing protocol, the first SF information published by the first SFF comprises:establishing a routing neighbor between the SDN controller and the first SFF, so as to acquire, by means of the routing protocol, the first SF information published by the first SFF; or,establishing a routing neighbor between the SDN controller and a routing reflector, and establishing a routing neighbor between the first SFF and the routing reflector, so as to acquire, by means of the routing protocol, the first SF information published by the first SFF.

According to another aspect of the present invention, a service chain forwarding control method is further provided, which is applied to a second service function forwarder (SFF), wherein the second SFF is an SFF controlled by a software defined network (SDN) controller. The method includes: performing (S302) service chain forwarding control according to a second forwarding table entry issued by the SDN controller,wherein the second forwarding table entry is generated by the SDN controller according to first SF information and second SF information acquired by the SDN controller; the first SF information is used for indicating the information of an SF attached to a first SFF, and the second SF information is used for indicating the information of an SF attached to a second SFF; and the first SFF is an SFF controlled by a local controller;acquiring, by the SDN controller and by means of a routing protocol, the first SF information published by the first SFF;wherein the step of acquiring, by the SDN controller and by means of the routing protocol, the first SF information published by the first SFF comprises:establishing a routing neighbor between the SDN controller and the first SFF, so that the SDN controller acquires, by means of the routing protocol, the first SF information published by the first SFF; or,establishing a routing neighbor between the SDN controller and a routing reflector, and establishing a routing neighbor between the first SFF and the routing reflector, so that the SDN controller acquires, by means of the routing protocol, the first SF information published by the first SFF.

According to another embodiment of the present invention, a service networking is further provided, including: a first service function forwarder (SFF), controlled by a local controller, wherein the first SFF is configured to acquire first service function (SF) information and second SF information, and generate a first forwarding table entry according to the first SF information and the second SF information, and the first SFF is further configured to perform service chain forwarding control on the first SFF according to the first forwarding table entry; a second SFF, controlled by an SDN controller; and the SDN controller, configured to acquire the first SF information and the second SF information, and generate a second forwarding table entry according to the first SF information and the second SF information, wherein the SDN controller is further configured to issue the second forwarding table entry to the second SFF to perform service chain forwarding control; and the first SF information is used for indicating the information of an SF attached to the first SFF, and the second SF information is used for indicating the information of an SF attached to the second SFF.

### Brief Description of the Drawings

The drawings described herein are used for providing a further understanding of the present invention and constitute a part of the present application. The exemplary embodiments of the present invention and descriptions thereof are used for explaining the present invention, but do not constitute improper limitations of the present invention. In the drawings:
Fig. 1 is a first flow diagram of a service chain forwarding control method provided according to an embodiment of the present invention;
Fig. 2 is a second flow diagram of a service chain forwarding control method provided according to an embodiment of the present invention;
Fig. 3 is a third flow diagram of a service chain forwarding control method provided according to an embodiment of the present invention;
Fig. 4 is a schematic diagram of a hybrid networking architecture provided according to a specific embodiment of the present invention;
Fig. 5 is a schematic structural diagram of a service networking provided according to an embodiment of the present invention;
Fig. 6 is a first structural block diagram of a service chain forwarding control apparatus provided according to an embodiment of the present invention;
Fig. 7 is a second structural block diagram of a service chain forwarding control apparatus provided according to an embodiment of the present invention; and
Fig. 8 is a third structural block diagram of a service chain forwarding control apparatus provided according to an embodiment of the present invention.

### Detailed Description of the Embodiments

Hereinafter, the present invention will be described in detail with reference to the drawings and in conjunction with the embodiments. It should be illustrated that, the embodiments in the present application and the features in the embodiments can be combined with each other in the case of no conflict.

It should be illustrated that, the terms "first", "second" and the like in the description and claims of the present invention and the above drawings are used for distinguishing similar objects, and are not necessarily used for describing a specific order or sequence.

### Embodiment 1

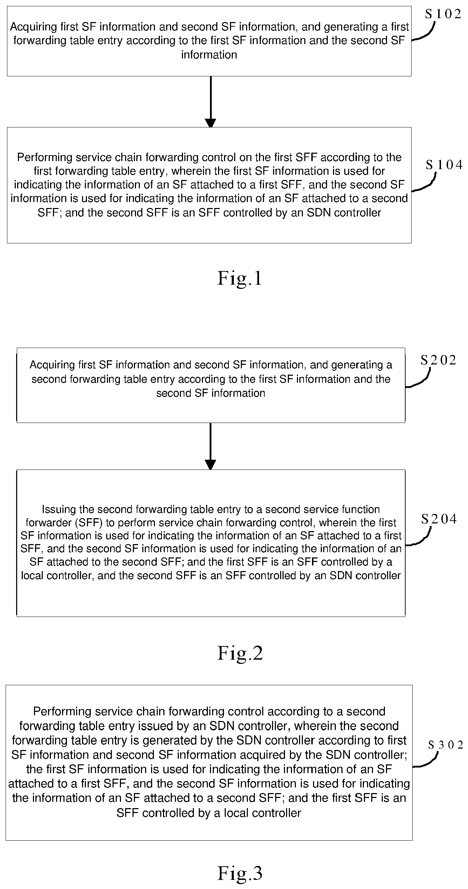

The present embodiment provides a service chain forwarding control method, which is applied to a first SFF, wherein the first SFF is an SFF controlled by a local controller. Fig. 1 is a first flow diagram of a service chain forwarding control method provided according to an embodiment of the present invention. As shown in Fig. 1, the service chain forwarding control method in the present embodiment includes:
S102, acquiring first SF information and second SF information, and generating a first forwarding table entry according to the first SF information and the second SF information; and
S104, performing service chain forwarding control on the first SFF according to the first forwarding table entry, wherein the first SF information is used for indicating the information of an SF attached to the first SFF, and the second SF information is used for indicating the information of an SF attached to a second SFF; and the second SFF is an SFF controlled by an SDN controller.

It should be further illustrated that, the networking architecture to which the service chain forwarding control method in the present embodiment is applied is a hybrid networking architecture. In the networking architecture, not only a forwarder in a hardware networking architecture and a corresponding local controller are provided, but a forwarder in a software networking architecture and a corresponding SDN controller are also provided.

Specifically, the first SFF in the above embodiment specifically indicates an SFF in a traditional hardware networking architecture, one or more first SFFs can be provided, and each first SFF is controlled by a corresponding hardware control device, such as a local switch and a router. The second SFF in the above embodiment specifically indicates an SFF in an SDN networking architecture, one or more second SFFs can be provided, and the one or more second SFFs are controlled by centrally deployed control software, that is, the SDN controller.

In the above embodiment, one or more SFs can be accessed to each first SFF or second SFF, and the SF accessed to the first SFF is the SF attached to the first SFF in the above embodiment. Similarly, the SF accessed to the second SFF is the SF attached to the first SFF in the above embodiment.

By means of the service chain forwarding control method in the above embodiment, the first SFF can acquire the first SF information that is used for indicating the information of the SF attached to the first SFF, and the second SF information that is used for indicating the information of the SF attached to the second SFF, and then generate the first forwarding table entry according to the first SF information and second SF information, so as to further perform service chain forwarding control on the first SFF according to the first forwarding table entry, wherein the first SFF is an SFF controlled by the local controller, and the second SFF is an SFF controlled by the SDN controller. Therefore, the service chain forwarding control method in the above embodiment can solve the problem in the related art that service chain forwarding control cannot be implemented in a hybrid networking scenario, so as to achieve an effect of implementing the service chain forwarding control in the hybrid networking scenario.

Specifically, by means of the service chain forwarding control method in the present embodiment, the first SFF can simultaneously acquire the first SF information of the SF that is attached to the first SFF in the hardware networking architecture, and the second SF information of the SF that is attached to the second SFF in the software networking architecture. Therefore, the overall orchestration of a service chain can be realized in an orchestration stage of the service chain, and forwarding control, which combines a distributed architecture corresponding to hardware networking with a centralized architecture corresponding to software networking, can also also be implemented for the forwarding control of the service chain, such that the efficiency of issuing table entries of a service in the system is greatly improved.

It should be further illustrated that, correspondingly, the SDN controller can also simultaneously acquire the first SF information of the SF that is attached to the first SFF in the hardware networking architecture, and the second SF information of the SF that is attached to the second SFF in the software networking architecture. The above process will be described in the following Embodiment 2, and thus will not be repeated herein.

In an embodiment, in the above step S102, acquiring the first SF information and the second SF information includes: acquiring, by means of a routing protocol, the second SF information published by the SDN controller.

It should be further illustrated that, since the first SFF cannot directly acquire the information of the SF attached to the second SFF, in the above optional embodiment, the SDN controller publishes the acquired second SF information, and then the first SFF acquires, by means of the routing protocol, the second SF information published by the SDN controller. Therefore, in the step S102 of the present embodiment, the first SFF can acquire the second SF information. The manner in which the first SFF acquires, by means of the routing protocol, the second SF information published by the SDN controller will be further illustrated below by optional embodiments.

In an embodiment, the step of acquiring, by means of the routing protocol, the second SF information published by the SDN controller includes: establishing a routing neighbor between the SDN controller and the first SFF, so as to acquire, by means of the routing protocol, the second SF information published by the SDN controller; or, establishing a routing neighbor between the SDN controller and a routing reflector, and establishing a routing neighbor between the first SFF and the routing reflector, so as to acquire, by means of the routing protocol, the second SF information published by the SDN controller.

It should be further illustrated that, in order to enable the first SFF to acquire the second SF information published by the SDN controller, the routing protocol needs to be established between the first SFF and the SDN controller. The routing protocol can be established by directly establishing the routing neighbor between the SDN controller and the first SFF, so that the first SFF can directly acquire the second SF information published by the SDN controller, or the SDN controller and the first SFF respectively establish the routing neighbors with the routing reflector, so that the routing reflector acquires the second SF information published by the SDN controller between the routing reflector, and further publishes the second SF information between the first SFF, so that the first SFF acquires the second SF information.

The above establishment process of the routing neighbor, and information publishing and receiving processes according to the routing neighbor or the routing reflector are all known to those skilled in the art, and thus will not be repeated herein.

In an embodiment, in the above step S102, acquiring the first service function (SF) information and the second SF information further includes: acquiring service chain configuration information sent by the SDN controller, so as to acquire the first SF information according to the service chain configuration information, wherein the service chain configuration information is generated by the SDN controller according to preset service chain orchestration information.

It should be further illustrated that, the service chain orchestration information specifically indicates an orchestration result of the service chain, that is, a result of orchestrating the service chain for implementing service logic or requirements. In an embodiment, the service chain orchestration information specifically includes at least one of the following: identification information of the service chain, a service type contained in the service chain, service function instance information contained in the service type, and entry information and exit information of a service function instance.

The service chain configuration information can be that an external orchestrator sends the service chain configuration information, which is orchestrated in advance according to service requirements, to the SDN controller by calling an interface of the SDN controller, or an administrator can directly orchestrate the information according to the service requirements, so as to determine the service chain configuration information and send the same to the SDN controller. The present invention does not limit the manner in which the SDN controller acquires the service orchestration information.

The service chain configuration information specifically indicates the information of a relevant object in the service chain orchestration information, that is, the process of the SDN controller generating the service chain configuration information according to the service chain orchestration information is that the SDN controller allocates corresponding indication information to the relevant object in the service chain orchestration information. In an embodiment, the service chain configuration information specifically includes at least one of the following: a service path index and a service index, wherein the service path index is used for indicating the object of the service chain; and the service index is used for indicating the service type contained in the service chain.

For example, in the case where the service chain orchestration information includes the identification information of the service chain, the SDN controller can allocate a service path index to the service chain according to the identification information of the service chain, and the service path index can make the SDN controller, the first SFF and the second SFF determine the object of the configured service chain. Similarly, the SDN controller can also allocate a service index to the service type according to the service type contained in the service chain in the service chain orchestration information, and the service index can make the SDN controller, the first SFF and the second SFF determine the configured service type.

The manner in which the first SFF acquires the service chain configuration information sent by the SDN controller will be further illustrated below by optional embodiments.

In an embodiment, the step of acquiring the service chain configuration information sent by the SDN controller includes: establishing a management connection between the SDN controller and the first SFF, so as to acquire the service chain configuration information issued by the SDN controller; or, establishing a routing neighbor between the SDN controller and the first SFF, so as to acquire, by means of the routing protocol, the service chain configuration information issued by the SDN controller; or, establishing a routing neighbor between the SDN controller and the routing reflector, and establishing a routing neighbor between the first SFF and the routing reflector, so as to acquire, by means of the routing protocol, the service chain configuration information issued by the SDN controller.

It should be further illustrated that, in the above optional embodiment, the manner of acquiring the service chain configuration information sent by the SDN controller can be that the first SFF directly establishes the management connection with the SDN controller, for example, the first SFF establishes a NETCONF connection with the SDN controller. In this case, the SDN controller can directly issue the service chain configuration information by means of the connection. The manner of acquiring the service chain configuration information sent by the SDN controller can also be that the first SFF and the SDN controller acquire the service chain configuration information by means of the routing protocol. Specifically, the first SFF can establish the routing neighbor, such as a BGP neighbor, with the SDN controller, or the first SFF and the SDN controller respectively establish the routing neighbors with the routing reflector, so that the first SFF acquires, by means of the routing protocol, the service chain configuration information published by the SDN controller.

The above establishment process of the management connection and the routing neighbor, and information publishing and receiving processes according to the routing neighbor or the routing reflector are all known to those skilled in the art, and thus will not be repeated herein.

In an embodiment, after the step of acquiring the first SF information according to the service chain configuration information, the method further includes: maintaining an SF corresponding to the first SF information by the local controller corresponding to the first SFF.

In order to further illustrate the working manner of the service chain forwarding control method in the embodiment of the present invention, a further description is given below by way of specific embodiments.

### Specific example1

Fig. 2 is a schematic diagram of a hybrid networking architecture provided according to the specific embodiment of the present invention. As shown in Fig. 2, an SFF-1 and an SFF-2 are SFFs controlled by a local controller, that is, the first SFF in the above embodiment; and an SFF-3 is an SFF controlled by an SDN controller, that is, the second SFF in the above embodiment. In the present specific embodiment, an overlay networking is used, therefore an end-to-end tunnel can also be established between the SFFs for message forwarding, such as a VXLAN-GPE tunnel shown in Fig. 1.

In the networking architecture shown in the present specific embodiment, common hosts or virtual hosts, such as a Host-1 and a Host-2, are accessed to the SFF-1; SFs are also accessed to corresponding SFFs, such as SF2-1 to SF2-6 are accessed to the SFF-2, and SF3-1 to SF3-3 are accessed to the SFF-3. The forwarding control of the service chain described in the above embodiment specifically refers to that, according to the orchestration of the service chain, the traffic, which meets preset conditions and is sent from the common hosts or the virtual hosts Host-1 and Host-2, passes through the corresponding SFs that are accessed to the corresponding SFFs in a preset sequence. The process of forwarding control of the service chain in the present specific embodiment will be described in detail below.

In the hybrid networking architecture in the present specific embodiment, the process of forwarding control of the service chain is as follows:
S1, an external orchestrator calls an interface of the SDN controller, or an administrator performs service chain orchestration by means of a management interface of the controller, so as to give the following service chain orchestration information: a name or an index of the service chain, a service type contained in the service chain, a service function instance contained in the service type, and an entry and an exit of the service function instance.

For example, the service chain orchestration information can include: the index of the service chain is SFC1; the service type contained in the service chain SFC1 includes SF-TYPE2 and SF-TYPE3; and the service function example for implementing SF-TYPE2 includes SF2-1 and SF2- 4, and the service function example for implementing SF-TYPE3 includes SF3-L. On this basis, the entry and exit of a service instance of the service chain can be determined by a corresponding access location and encapsulation of the service function instance, or a given IP or MAC address. For example, the SF2-1 is accessed to a port 1 of the SFF2 (and a VLAN tag is 100), the SF2-4 is accessed to a port 2 of the SFF2 (and the VLAN tag is 200), and traffic enters and exits the SF from the same port; and the IP location of the SF3-1 is IP3-1, and the traffic enters and exits the SF from the same port.

S2, the external orchestrator calls the interface of the SDN controller, or the administrator gives a classification feature by means of the management interface of the controller, and specifies a traffic object that needs to enter the service chain indicated in S1, for example, it is set that the traffic that exits from the host Host1-1 and meets a quintuple feature of FLOW1-1 needs to enter the service chain SFC1.

S3, the SDN controller generates service chain configuration information according to the service chain orchestration information. Specifically, the SDN controller allocates a service path index (Service Path Index, SPI) to the service chain, for example, the SPI of the SFC1 allocated by the SDN controller is 1. Further, the SDN controller allocates a service index (Service Index, SI) to the service type, for example, the SI of the SF-TYPE2 allocated by the SDN controller is 100, and the SI of the SF-TYPE3 is 99.

S4, the SDN controller configures the service chain configuration information for the first SFF, and the configuration can be performed in a plurality of manners. Specifically, one configuration manner can be: the SDN controller can establish a management connection with the first SFF. For example, the SDN controller establishes a NETCONF connection with the SFF1 and the SFF2, respectively.

After establishing the connection, the SDN controller issues, to the first SFF, a service chain traffic object in the above S2 and the service chain configuration information in the above S3, that is, the configuration of the SPI and the SI. For example: the SDN controller issues to the SFF1: the traffic entering from the port 1 and satisfying the quintuple of FLOW1-1, an NSH tag needs to be inserted and is identified such that the SPI is 1 and the SI is 100, and service chain forwarding needs to be performed; and the SDN controller issues to the SFF2: the traffic with SPI of 1 and SI of 99 in the NSH tag, and service chain forwarding needs to be performed.

In the above configuration process, another configuration manner can be: the SDN controller establishes a routing neighbor with the first SFF, a routing reflector can also be disposed between the SDN controller and the first SFF, and the SDN controller and the first SFF respectively establish routing neighbors with the routing reflector, for example, the SDN controller establishes a BGP neighbor with the SFF1 and the SFF2; on the basis of establishing the routing neighbor, the SDN controller can publish the service chain configuration information, namely, the SPI and the SI, for example, the SDN controller publishes the traffic that satisfies the quintuple of FLOW1-1 by means of a routing protocol, and the NSH tag needs to be inserted and is identified such that the SPI is 1 and the SI is 100; in the service chain with the SPI of 1 in the NSH tag, there are two service functions in which the Sls are 100 and 99, and it is necessary to perform service chain forwarding on the service functions; and the service function with the SI of 99 is an end point of the service chain, and the traffic exiting therefrom needs to be forwarded normally.

S5, after the SDN controller publishes the SPI and SI, the first SFF can acquire the SPI and SI by means of the routing protocol (including a routing protocol with the SDN controller, or a routing protocol with the routing reflector). In this way, the first SFF can discover the information of the SF attached to the first SFF, that is, the first SF information. At the same time, the first SFF can also cause the local controller corresponding to the first SFF to maintain the SF attached to the first SFF.

S6, the SDN controller establishes an SDN control connection with the second SFF, and collects corresponding network link information to maintain the overall physical and virtual topological conditions of the network. For example, the SDN controller establishes an OpenFlow connection with the SFF3.

S7, the SDN controller further runs MAC learning, ARP learning or other interaction protocols with the service function instance, and discovers and maintains the location and state of the service function (SF) attached to each second SFF, that is, the second SF information. For example, the SF3-1 sends a free ARP, wherein the IP address is IP3-1; the SFF3 sends the free ARP to the controller through OpenFlow; and the SDN controller learns that the SF3-1 of the SF-TYPE3 is accessed to the port 1 of the SFF3.

S8, the SDN controller establishes a routing neighbor with the first SFF, or a routing reflector can be disposed between the SDN controller and the first SFF, and the SDN controller and the first SFF respectively establish routing neighbors with the route reflector, for example, the SDN controller establishes a BGP neighbor with the SFF1 and the SFF2.

S9, the SDN controller publishes, to the first SFF, the information of the SF attached to the second SFF, that is, the second SF information. Correspondingly, the first SFF publishes, to the SDN controller, the information of the SF attached to itself, that is, the first SF information. For example, the SF3-1, published by the SDN controller and with SPI of 1 and SI of 99, is accessed to the SFF3, and the encapsulation manner is VXLAN-GPE and NSH encapsulation; and the SF2-1 and SF2-4, published by the SFF2 and with SPI of 1 and SI of 100, are accessed to the SFF2, and the encapsulation manner is VXLAN-GPE and NSH encapsulation.

S10, the first SFF generates a first forwarding table entry according to the first SF information configured by itself and the second SF information learned from the SDN controller in the step S9, and performs service chain forwarding control according to the first forwarding table entry; and the SDN controller generates a second forwarding table entry according to the second SF information learned by itself and the first SF information learned from the first SFF in the step S9, and the SDN controller issues the second forwarding table entry to the second SFF to perform service chain forwarding control.

For example, for the first SFF, the SF1 issues an ACL rule and an NSH forwarding table according to flow classification rules issued by the controller and routing about the SF2-1 and the SF2-4 published by the SF2:
inport=1, 5-tuple=flow1-1, actions=encap(nsh, spi=1, si=100)
spi=1, si=100, actions=output(4)

The SF2 receives a service chain configuration and routing about the SF3-1 published by the SDN controller:
spi=1, si=100, actions=push-vlan 100, output(1) or push-vlan 200, output(2)
spi=1, si=99, actions=output(4)

For the second SFF, the SDN controller issues the forwarding table on the SF3 according to service chain configuration information, orchestration information, and the information learned from the SF3-1:
spi=1, si=99, actions=output(1)
spi=1, si=98, actions=decap(nsh)

From the description of the above embodiment, those skilled in the art can clearly understand that, the method according to the above embodiment can be implemented by means of software plus a necessary general hardware platform, and of course can also be implemented by hardware, but in many cases, the former is a better implementation. Based on this understanding, the technical solutions of the present invention essentially or the parts contributing to the prior art can be embodied in the form of a software product, and the computer software product is stored in a storage medium (such as an ROM/RAM, a magnetic disk, a CD-ROM), and includes several instructions for causing a terminal device (which can be a mobile phone, a computer, a server, or a network device and the like) to execute the method described in various embodiments of the present invention.

### Embodiment 2

The present embodiment provides a service chain forwarding control method, which is applied to an SDN controller. Fig. 3 is a second flow diagram of a service chain forwarding control method provided according to an embodiment of the present invention. As shown in Fig. 3, the service chain forwarding control method in the present embodiment includes:
S202, acquiring first SF information and second SF information, and generating a second forwarding table entry according to the first SF information and the second SF information; and
S204, issuing the second forwarding table entry to a second service function forwarder (SFF) to perform service chain forwarding control,
wherein the first SF information is used for indicating the information of an SF attached to a first SFF, and the second SF information is used for indicating the information of an SF attached to the second SFF; and the first SFF is an SFF controlled by a local controller, and the second SFF is an SFF controlled by the SDN controller.

It should be further illustrated that, the networking architecture to which the service chain forwarding control method in the present embodiment is applied is a hybrid networking architecture. In the networking architecture, not only a forwarder in a hardware networking architecture and a corresponding local controller are provided, but a forwarder in a software networking architecture and a corresponding SDN controller are also provided.

Specifically, the first SFF in the above embodiment specifically indicates an SFF in a traditional hardware networking architecture, one or more first SFFs can be provided, and each first SFF is controlled by a corresponding hardware control device, such as a local switch and a router. The second SFF in the above embodiment specifically indicates an SFF in an SDN networking architecture, one or more second SFFs can be provided, and the one or more second SFFs are controlled by centrally deployed control software, that is, the SDN controller.

In the above embodiment, one or more SFs can be accessed to each first SFF or second SFF, and the SF accessed to the first SFF is the SF attached to the first SFF in the above embodiment. Similarly, the SF accessed to the second SFF is the SF attached to the first SFF in the above embodiment.

By means of the service chain forwarding control method in the above embodiment, the SDN controller can acquire the first SF information that is used for indicating the information of the SF attached to the first SFF, and the second SF information that is used for indicating the information of the SF attached to the second SFF, and then generate the second forwarding table entry according to the first SF information and second SF information, so as to further issue the second forwarding table entry to the second SFF, so that the second SFF performs service chain forwarding control on the second SFF according to the second forwarding table entry, wherein the first SFF is an SFF controlled by the local controller, and the second SFF is an SFF controlled by the SDN controller. Therefore, the service chain forwarding control method in the above embodiment can solve the problem in the related art that service chain forwarding control cannot be implemented in a hybrid networking scenario, so as to achieve an effect of implementing the service chain forwarding control in the hybrid networking scenario.

Specifically, by means of the service chain forwarding control method in the present embodiment, the SDN controller can simultaneously acquire the first SF information of the SF that is attached to the first SFF in the hardware networking architecture, and the second SF information of the SF that is attached to the second SFF in the software networking architecture. Therefore, the overall orchestration of a service chain can be realized in an orchestration stage of the service chain, and forwarding control, which combines a distributed architecture corresponding to hardware networking with a centralized architecture corresponding to software networking, can also also be implemented for the forwarding control of the service chain, such that the efficiency of issuing table entries of a service in the system is greatly improved.

It should be further illustrated that, correspondingly, the first SFF can also simultaneously acquire the first SF information of the SF that is attached to the first SFF in the hardware networking architecture, and the second SF information of the SF that is attached to the second SFF in the software networking architecture. The above process has been described in the above Embodiment 1, and thus will not be repeated herein.

In an embodiment, in the above step S202, acquiring the first SF information and the second SF information includes: acquiring, by means of a routing protocol, the first SF information published by the first SFF.

It should be further illustrated that, since the SDN controller cannot directly acquire the information of the SF attached to the first SFF, in the above optional embodiment, the first SFF publishes the acquired first SF information, and then the SDN controller acquires, by means of the routing protocol, the first SF information published by the first SFF. Therefore, in the step S202 of the present embodiment, the SDN controller can acquire the first SF information. The manner in which the SDN controller acquires, by means of the routing protocol, the first SF information published by the first SFF will be further illustrated below by optional embodiments.

In an embodiment, the step of acquiring, by means of the routing protocol, the first SF information published by the first SFF includes: establishing a routing neighbor between the SDN controller and the first SFF, so as to acquire, by means of the routing protocol, the first SF information published by the first SFF; or, establishing a routing neighbor between the SDN controller and a routing reflector, and establishing a routing neighbor between the first SFF and the routing reflector, so as to acquire, by means of the routing protocol, the first SF information published by the first SFF.

It should be further illustrated that, in order to enable the SDN controller to acquire the first SF information published by the first SFF, the routing protocol needs to be established between the SDN controller and the first SFF. The routing protocol can be established by directly establishing the routing neighbor between the SDN controller and the first SFF, so that the SDN controller can directly acquire the first SF information published by the first SFF, or the SDN controller and the first SFF respectively establish the routing neighbors with the routing reflector, so that the routing reflector acquires the first SF information published by the first SFF between the routing reflector, and further publishes the first SF information between the SDN controller, so that the SDN controller acquires the first SF information.

The above establishment process of the routing neighbor, and information publishing and receiving processes according to the routing neighbor or the routing reflector are all known to those skilled in the art, and thus will not be repeated herein.

In an embodiment, before acquiring the first SF information and the second SF information, the above step S102 further includes: acquiring service chain configuration information according to preset service chain orchestration information, and sending the service chain configuration information to the first SFF, so that the first SFF generates the first SF information according to the service chain configuration information.

It should be further illustrated that, the service chain orchestration information specifically indicates an orchestration result of the service chain, that is, a result of orchestrating the service chain for implementing service logic or requirements. In an embodiment, the service chain orchestration information specifically includes at least one of the following: identification information of the service chain, a service type contained in the service chain, service function instance information contained in the service type, and entry information and exit information of a service function instance.

The service chain configuration information can be that an external orchestrator sends the service chain configuration information, which is orchestrated in advance according to service requirements, to the SDN controller by calling an interface of the SDN controller, or an administrator can directly orchestrate the information according to the service requirements, so as to determine the service chain configuration information and send the same to the SDN controller. The present invention does not limit the manner in which the SDN controller acquires the service orchestration information.

The service chain configuration information specifically indicates the information of a relevant object in the service chain orchestration information, that is, the process of the SDN controller generating the service chain configuration information according to the service chain orchestration information is that the SDN controller allocates corresponding indication information to the relevant object in the service chain orchestration information. In an embodiment, the service chain configuration information specifically includes at least one of the following: a service path index and a service index, wherein the service path index is used for indicating the object of the service chain; and the service index is used for indicating the service type contained in the service chain.

For example, in the case where the service chain orchestration information includes the identification information of the service chain, the SDN controller can allocate a service path index to the service chain according to the identification information of the service chain, and the service path index can make the SDN controller, the first SFF and the second SFF determine the object of the configured service chain. Similarly, the SDN controller can also allocate a service index to the service type according to the service type contained in the service chain in the service chain orchestration information, and the service index can make the SDN controller, the first SFF and the second SFF determine the configured service type.

The manner in which the SDN controller sends the service chain configuration information to the first SFF will be further illustrated below by optional embodiments.

In an embodiment, the step of sending the service chain configuration information to the first SFF includes: establishing a connection between the SDN controller and the first SFF, so as to issue the service chain configuration information to the first SFF; or, establishing a routing neighbor between the SDN controller and the first SFF, so as to issue, by means of the routing protocol, the service chain configuration information to the first SFF; or, establishing a routing neighbor between the SDN controller and the routing reflector, and establishing a routing neighbor between the first SFF and the routing reflector, so as to issue, by means of the routing protocol, the service chain configuration information to the first SFF.

It should be further illustrated that, in the above optional embodiment, the manner in which the SDN controller sends the service chain configuration information to the first SFF can be that the SDN controller directly establishes the management connection with the first SFF, for example, the first SFF establishes a NETCONF connection with the SDN controller. In this case, the SDN controller can directly issue the service chain configuration information by means of the above connection. The manner in which the SDN controller sends the service chain configuration information to the first SFF can also be that the SDN controller and the first SFF publish the service chain configuration information by means of the routing protocol. Specifically, the SDN controller can establish the routing neighbor, such as a BGP neighbor, with the first SFF, or the SDN controller and the first SFF respectively establish the routing neighbors with the routing reflector, so that the SDN controller publishes, by means of the routing protocol, the service chain configuration information, and then the first SFF acquires the service chain configuration information.

In an embodiment, in the above step S102, acquiring the first SF information and the second SF information further includes: establishing a connection between the SDN controller and the second SFF, so as to acquire the second SF information by means of a preset interaction protocol that runs between the SDN controller and the second SFF.

It should be further illustrated that, the manner in which the SDN controller acquires the second SF information can be that the SDN controller directly acquires the second SF information by means of the second SFF controlled by itself. Specifically, the SDN controller establishes an SDN control connection with the second SFF, for example, an OpenFlow connection, on this basis, the SDN controller can run the preset interaction protocol with the second SFF, and the second SFF can send the second SF information to the SDN controller during the process of running the protocol.

In an embodiment, after the step of acquiring the second SF information by means of the preset interaction protocol that runs between the SDN controller and the second SFF, the method further includes: maintaining an SF corresponding to the second SF information.

From the description of the above embodiment, those skilled in the art can clearly understand that, the method according to the above embodiment can be implemented by means of software plus a necessary general hardware platform, and of course can also be implemented by hardware, but in many cases, the former is a better implementation. Based on this understanding, the technical solutions of the present invention essentially or the parts contributing to the prior art can be embodied in the form of a software product, and the computer software product is stored in a storage medium (such as an ROM/RAM, a magnetic disk, a CD-ROM), and includes several instructions for causing a terminal device (which can be a mobile phone, a computer, a server, or a network device and the like) to execute the method described in various embodiments of the present invention.

### Embodiment 3

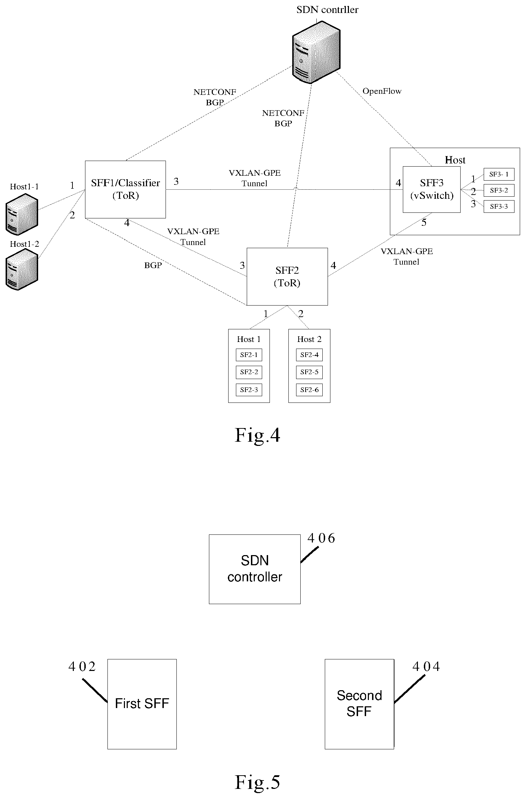

The present embodiment provides a service chain forwarding control method, which is applied to a second SFF, wherein the second SFF is an SFF controlled by an SDN controller. Fig. 4 is a third flow diagram of a service chain forwarding control method provided according to an embodiment of the present invention. As shown in Fig. 4, the service chain forwarding control method in the present embodiment includes:
S302, performing service chain forwarding control according to a second forwarding table entry issued by the SDN controller, wherein the second forwarding table entry is generated by the SDN controller according to first SF information and second SF information acquired by the SDN controller; the first SF information is used for indicating the information of an SF attached to a first SFF, and the second SF information is used for indicating the information of an SF attached to the second SFF; and the first SFF is an SFF controlled by a local controller.

The remaining optional embodiments and technical effects of the service chain forwarding control method in the present embodiment all correspond to those of the service chain forwarding control method recorded in Embodiment 2, and thus will not be repeated herein.

In an embodiment, the method in the present embodiment further includes: acquiring, by the SDN controller and by means of a routing protocol, the first SF information published by the first SFF.

In an embodiment, the step of acquiring, by the SDN controller and by means of the routing protocol, the first SF information published by the first SFF includes: establishing a routing neighbor between the SDN controller and the first SFF, so that the SDN controller acquires, by means of the routing protocol, the first SF information published by the first SFF; or, establishing a routing neighbor between the SDN controller and a routing reflector, and establishing a routing neighbor between the first SFF and the routing reflector, so that the SDN controller acquires, by means of the routing protocol, the first SF information published by the first SFF.

In an embodiment, the method in the present embodiment further includes: generating, by the SDN controller, service chain configuration information according to preset service chain orchestration information, and sending the service chain configuration information to the first SFF, so that the first SFF generates the first SF information according to the service chain configuration information.

In an embodiment, the step of sending the service chain configuration information to the first SFF includes: establishing a connection between the SDN controller and the first SFF, so as to issue the service chain configuration information to the first SFF; or, establishing a routing neighbor between the SDN controller and the first SFF, so as to issue, by means of the routing protocol, the service chain configuration information to the first SFF; or, establishing a routing neighbor between the SDN controller and the routing reflector, and establishing a routing neighbor between the first SFF and the routing reflector, so as to issue, by means of the routing protocol, the service chain configuration information to the first SFF.

In an embodiment, the service chain orchestration information specifically includes at least one of the following: identification information of the service chain, a service type contained in the service chain, service function instance information contained in the service type, and entry information and exit information of a service function instance.

In an embodiment, the service chain configuration information specifically includes at least one of the following: a service path index and a service index, wherein the service path index is used for indicating the object of the service chain; and the service index is used for indicating the service type contained in the service chain.

In an embodiment, the method in the present embodiment further includes: establishing a connection between the SDN controller and the second SFF, so that the SDN controller acquires the second SF information by means of a preset interaction protocol that runs between the SDN controller and the second SFF.

In an embodiment, after the SDN controller acquires the second SF information by means of the preset interaction protocol that runs between the SDN controller and the second SFF, the method further includes: maintaining, by the SDN controller, an SF corresponding to the second SF information.

From the description of the above embodiment, those skilled in the art can clearly understand that, the method according to the above embodiment can be implemented by means of software plus a necessary general hardware platform, and of course can also be implemented by hardware, but in many cases, the former is a better implementation. Based on this understanding, the technical solutions of the present invention essentially or the parts contributing to the prior art can be embodied in the form of a software product, and the computer software product is stored in a storage medium (such as an ROM/RAM, a magnetic disk, a CD-ROM), and includes several instructions for causing a terminal device (which can be a mobile phone, a computer, a server, or a network device and the like) to execute the method described in various embodiments of the present invention.

### Embodiment 4

The present embodiment provides a service networking, and Fig. 5 is a schematic structural diagram of a service networking provided according to an embodiment of the present invention. As shown in Fig. 5, the service networking in the present embodiment includes:
a first SFF 402, controlled by a local controller, wherein the first SFF is configured to acquire first SF information and second SF information, and generate a first forwarding table entry according to the first SF information and the second SF information, and the first SFF 402 is further configured to perform service chain forwarding control on the first SFF 402 according to the first forwarding table entry;
a second SFF 404, controlled by an SDN controller 406; and
the SDN controller 406, configured to acquire the first SF information and the second SF information, and generate a second forwarding table entry according to the first SF information and the second SF information, wherein the SDN controller 406 is further configured to issue the second forwarding table entry to the second SFF 404 to perform service chain forwarding control, wherein the first SF information is used for indicating the information of an SF attached to the first SFF 402, and the second SF information is used for indicating the information of an SF attached to the second SFF 404.

It should be further illustrated that, the interaction and working modes among the first SFF, the second SFF and the SDN controller in the service networking in the present embodiment are the same as those of the service chain forwarding control method described in the above Embodiment 1, Embodiment 2 and Embodiment 3, and thus will not be repeated herein.

### Embodiment 5

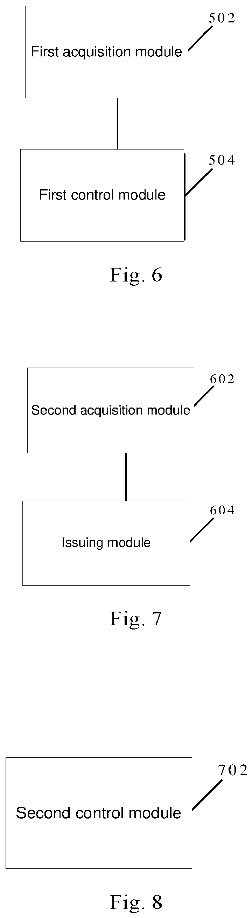

The present embodiment provides a service chain forwarding control apparatus, which is applied to a first SFF, wherein the first SFF is an SFF controlled by a local controller; and the apparatus is used for implementing the above embodiments and preferred implementations, and what has been illustrated will not be repeated herein. As used below, the term "module" can implement a combination of software and/or hardware of predetermined functions. Although the apparatus described in the following embodiment is preferably implemented in software, implementations in hardware, or a combination of software and hardware are also possible and conceivable. Fig. 6 is a first structural block diagram of a service chain forwarding control apparatus provided according to an embodiment of the present invention. As shown in Fig. 6, the service chain forwarding control apparatus in the present embodiment includes:
a first acquisition module 502, configured to acquire first SF information and second SF information, and generate a first forwarding table entry according to the first SF information and the second SF information; and
a first control module 504, configured to perform service chain forwarding control on the first SFF according to the first forwarding table entry, wherein the first SF information is used for indicating the information of an SF attached to the first SFF, and the second SF information is used for indicating the information of an SF attached to a second SFF; and the second SFF is an SFF controlled by an SDN controller.

The remaining optional embodiments and technical effects of the service chain forwarding control apparatus in the present embodiment all correspond to those of the service chain forwarding control apparatus recorded in Embodiment 1, and thus will not be repeated herein.

In an embodiment, the step of acquiring the first SF information and the second SF information includes: acquiring, by means of a routing protocol, the second SF information published by the SDN controller.

In an embodiment, the step of acquiring, by means of the routing protocol, the second SF information published by the SDN controller includes:
establishing a routing neighbor between the SDN controller and the first SFF, so as to acquire, by means of the routing protocol, the second SF information published by the SDN controller; or,
establishing a routing neighbor between the SDN controller and a routing reflector, and establishing a routing neighbor between the first SFF and the routing reflector, so as to acquire, by means of the routing protocol, the second SF information published by the SDN controller.

In an embodiment, the step of acquiring the first service function (SF) information and the second SF information further includes: acquiring service chain configuration information sent by the SDN controller, so as to acquire the first SF information according to the service chain configuration information, wherein the service chain configuration information is generated by the SDN controller according to preset service chain orchestration information.

In an embodiment, the step of acquiring the service chain configuration information sent by the SDN controller includes:
establishing a management connection between the SDN controller and the first SFF, so as to acquire the service chain configuration information issued by the SDN controller; or,
establishing a routing neighbor between the SDN controller and the first SFF, so as to acquire, by means of the routing protocol, the service chain configuration information issued by the SDN controller; or,
establishing a routing neighbor between the SDN controller and the routing reflector, and establishing a routing neighbor between the first SFF and the routing reflector, so as to acquire, by means of the routing protocol, the service chain configuration information issued by the SDN controller.

In an embodiment, the service chain orchestration information specifically includes at least one of the following: identification information of the service chain, a service type contained in the service chain, service function instance information contained in the service type, and entry information and exit information of a service function instance.

In an embodiment, the service chain configuration information specifically includes at least one of the following: a service path index and a service index, wherein the service path index is used for indicating the object of the service chain; and the service index is used for indicating the service type contained in the service chain.

In an embodiment, after the step of acquiring the first SF information according to the service chain configuration information, the method further includes: maintaining an SF corresponding to the first SF information by the local controller corresponding to the first SFF.

It should be illustrated that, the above modules can be implemented by software or hardware, and the latter can be implemented in the following manners, but are not limited to: the above modules are all located in the same processor; or, the above modules are respectively located in different processors in the form of arbitrary combinations.

### Embodiment 6

The present embodiment provides a service chain forwarding control apparatus, which is applied to an SDN controller; and the apparatus is used for implementing the above embodiments and preferred implementations, and what has been illustrated will not be repeated herein. As used below, the term "module" can implement a combination of software and/or hardware of predetermined functions. Although the apparatus described in the following embodiment is preferably implemented in software, implementations in hardware, or a combination of software and hardware are also possible and conceivable. Fig. 7 is a second structural block diagram of a service chain forwarding control apparatus provided according to an embodiment of the present invention. As shown in Fig. 7, the service chain forwarding control apparatus in the present embodiment includes:
a second acquisition module 602, configured to acquire first SF information and second SF information, and generate a second forwarding table entry according to the first SF information and the second SF information; and
an issuing module, configured to issue the second forwarding table entry to a second SFF to perform service chain forwarding control, wherein the first SF information is used for indicating the information of an SF attached to a first SFF, and the second SF information is used for indicating the information of an SF attached to the second SFF; and the first SFF is an SFF controlled by a local controller, and the second SFF is an SFF controlled by an SDN controller.

The remaining optional embodiments and technical effects of the service chain forwarding control apparatus in the present embodiment all correspond to those of the service chain forwarding control apparatus recorded in Embodiment 2, and thus will not be repeated herein.

In an embodiment, the step of acquiring the first SF information and the second SF information includes: acquiring, by means of a routing protocol, the first SF information published by the first SFF.

In an embodiment, the step of acquiring, by means of the routing protocol, the first SF information published by the first SFF includes:
establishing a routing neighbor between the SDN controller and the first SFF, so as to acquire, by means of the routing protocol, the first SF information published by the first SFF; or,
establishing a routing neighbor between the SDN controller and a routing reflector, and establishing a routing neighbor between the first SFF and the routing reflector, so as to acquire, by means of the routing protocol, the first SF information published by the first SFF.

In an embodiment, before the step of acquiring the first SF information and the second SF information, the method further includes: generating service chain configuration information according to preset service chain orchestration information, and sending the service chain configuration information to the first SFF, so that the first SFF generates the first SF information according to the service chain configuration information.

In an embodiment, the step of sending the service chain configuration information to the first SFF includes:
establishing a connection between the SDN controller and the first SFF, so as to issue the service chain configuration information to the first SFF; or,
establishing a routing neighbor between the SDN controller and the first SFF, so as to issue, by means of the routing protocol, the service chain configuration information to the first SFF; or,
establishing a routing neighbor between the SDN controller and the routing reflector, and establishing a routing neighbor between the first SFF and the routing reflector, so as to issue, by means of the routing protocol, the service chain configuration information to the first SFF.

In an embodiment, the service chain orchestration information specifically includes at least one of the following: identification information of the service chain, a service type contained in the service chain, service function instance information contained in the service type, and entry information and exit information of a service function instance.

In an embodiment, the service chain configuration information specifically includes at least one of the following: a service path index and a service index, wherein the service path index is used for indicating the object of the service chain; and the service index is used for indicating the service type contained in the service chain

In an embodiment, the step of acquiring the first SF information and the second SF information further includes: establishing a connection between the SDN controller and the second SFF, so as to acquire the second SF information by means of a preset interaction protocol that runs between the SDN controller and the second SFF.

In an embodiment, after the step of acquiring the second SF information by means of the preset interaction protocol that runs between the SDN controller and the second SFF, the method further includes: maintaining an SF corresponding to the second SF information.

It should be illustrated that, the above modules can be implemented by software or hardware, and the latter can be implemented in the following manners, but are not limited to: the above modules are all located in the same processor; or, the above modules are respectively located in different processors in the form of arbitrary combinations.

### Embodiment 7

The present embodiment provides a service chain forwarding control apparatus, which is applied to a second SFF, wherein the second SFF is an SFF controlled by an SDN controller; and the apparatus is used for implementing the above embodiments and preferred implementations, and what has been illustrated will not be repeated herein. As used below, the term "module" can implement a combination of software and/or hardware of predetermined functions. Although the apparatus described in the following embodiment is preferably implemented in software, implementations in hardware, or a combination of software and hardware are also possible and conceivable. Fig. 8 is a third structural block diagram of a service chain forwarding control apparatus provided according to an embodiment of the present invention. As shown in Fig. 8, the service chain forwarding control apparatus in the present embodiment includes:
a second control module, configured to perform service chain forwarding control according to a second forwarding table entry issued by the SDN controller, wherein the second forwarding table entry is generated by the SDN controller according to first SF information and second SF information acquired by the SDN controller; the first SF information is used for indicating the information of an SF attached to a first SFF, and the second SF information is used for indicating the information of an SF attached to the second SFF; and the first SFF is an SFF controlled by a local controller.

The remaining optional embodiments and technical effects of the service chain forwarding control apparatus in the present embodiment all correspond to those of the service chain forwarding control apparatus recorded in Embodiment 3, and thus will not be repeated herein.

In an embodiment, the second control module includes: acquiring, by the SDN controller and by means of a routing protocol, the first SF information published by the first SFF.

In an embodiment, the step of acquiring, by the SDN controller and by means of the routing protocol, the first SF information published by the first SFF includes: establishing a routing neighbor between the SDN controller and the first SFF, so that the SDN controller acquires, by means of the routing protocol, the first SF information published by the first SFF; or, establishing a routing neighbor between the SDN controller and a routing reflector, and establishing a routing neighbor between the first SFF and the routing reflector, so that the SDN controller acquires, by means of the routing protocol, the first SF information published by the first SFF.

In an embodiment, the second control module includes: generating, by the SDN controller, service chain configuration information according to preset service chain orchestration information, and sending the service chain configuration information to the first SFF, so that the first SFF generates the first SF information according to the service chain configuration information.

In an embodiment, the step of sending the service chain configuration information to the first SFF includes: establishing a connection between the SDN controller and the first SFF, so as to issue the service chain configuration information to the first SFF; or, establishing a routing neighbor between the SDN controller and the first SFF, so as to issue, by means of the routing protocol, the service chain configuration information to the first SFF; or, establishing a routing neighbor between the SDN controller and the routing reflector, and establishing a routing neighbor between the first SFF and the routing reflector, so as to issue, by means of the routing protocol, the service chain configuration information to the first SFF.

In an embodiment, the service chain orchestration information specifically includes at least one of the following: identification information of the service chain, a service type contained in the service chain, service function instance information contained in the service type, and entry information and exit information of a service function instance.

In an embodiment, the service chain configuration information specifically includes at least one of the following: a service path index and a service index, wherein the service path index is used for indicating the object of the service chain; and the service index is used for indicating the service type contained in the service chain.

In an embodiment, the second control module includes: establishing a connection between the SDN controller and the second SFF, so that the SDN controller acquires the second SF information by means of a preset interaction protocol that runs between the SDN controller and the second SFF.

In an embodiment, after the SDN controller acquires the second SF information by means of the preset interaction protocol that runs between the SDN controller and the second SFF, the method further includes: maintaining, by the SDN controller, an SF corresponding to the second SF information.

It should be illustrated that, the above modules can be implemented by software or hardware, and the latter can be implemented in the following manners, but are not limited to: the above modules are all located in the same processor; or, the above modules are respectively located in different processors in the form of arbitrary combinations.

### Embodiment 8

The embodiment of the present invention further provides a computer-readable storage medium, wherein a computer program is stored in the computer-readable storage medium, and the computer program is configured to execute the steps in any of the above method embodiments while running.

Optionally, in the present embodiment, the computer-readable storage medium can be configured to store a computer program for executing the steps of the methods described in the above embodiments.

Optionally, in the present embodiment, the computer-readable storage medium can include, but is not limited to, various media that can store computer programs, such as a USB flash disk, a read-only memory (Read-Only Memory, referred to as ROM for short), a random access memory (Random Access Memory, referred to as ROM for short), a mobile hard disk drive, a magnetic disk, or a CD-ROM.

### Embodiment 9

The embodiment of the present invention further provides an electronic apparatus, including a memory and a processor, wherein a computer program is stored in the memory, and the processor is configured to run the computer program to execute the steps in any of the above method embodiments.

Optionally, the electronic apparatus can further include a transmission device and an input/output device, wherein the transmission device is connected to the processor, and the input/output device is connected to the processor.

Optionally, in the present embodiment, the processor can be configured to execute the steps of the methods described in the above embodiments by means of a computer program.

Optionally, for specific examples in the present embodiment, reference can be made to the examples described in the foregoing embodiments and optional embodiments, and details are not repeated in the present embodiment.

Obviously, those skilled in the art should understand that, various modules or steps of the present invention can be implemented by a general-purpose computing apparatus, and they can be centralized on a single computing apparatus or distributed on a network composed of a plurality of computing apparatuses. Alternatively, they can be implemented by program codes executable by the computing apparatus, such that they can be stored in a storage apparatus and executed by the computing apparatus, and in some cases, the steps shown or described are performed in a different sequence other than here, or they are separately fabricated into individual integrated circuit modules, or a plurality of modules or steps therein are fabricated into a single integrated circuit module for implementation. As such, the present invention is not limited to any particular combination of hardware and software.

The above descriptions are only preferred embodiments of the present invention, and are not intended to limit the present invention. For those skilled in the art, the present invention can have various modifications and changes within the scope of the appended claims.

## Claims

1. A service chain forwarding control method, which is applied to a first service function forwarder, SFF, wherein the first SFF is an SFF controlled by a local controller; and the method comprises:
acquiring (S102) first service function, SF, information and second SF information, and generating a first forwarding table entry according to the first SF information and the second SF information; and performing (S104) service chain forwarding control on the first SFF according to the first forwarding table entry,
wherein the first SF information is used for indicating the information of an SF attached to the first SFF, and the second SF information is used for indicating the information of an SF attached to a second SFF; and the second SFF is an SFF controlled by a software defined network, SDN, controller;
wherein the step of acquiring the first service function, SF, information and the second SF information further comprises:
acquiring service chain configuration information sent by the SDN controller, so as to acquire the first SF information according to the service chain configuration information, wherein the service chain configuration information is generated by the SDN controller according to preset service chain orchestration information;
wherein the step of acquiring the service chain configuration information sent by the SDN controller comprises:
establishing a management connection between the SDN controller and the first SFF, so as to acquire the service chain configuration information issued by the SDN controller; or,
establishing a routing neighbor between the SDN controller and the first SFF, so as to acquire, by means of the routing protocol, the service chain configuration information issued by the SDN controller; or,
establishing a routing neighbor between the SDN controller and the routing reflector, and establishing a routing neighbor between the first SFF and the routing reflector, so as to acquire, by means of the routing protocol, the service chain configuration information issued by the SDN controller.

2. The method according to claim 1, wherein the step of acquiring (S102) the first SF information and the second SF information comprises:
acquiring, by means of a routing protocol, the second SF information published by the SDN controller;
wherein the step of acquiring, by means of the routing protocol, the second SF information published by the SDN controller comprises:
establishing a routing neighbor between the SDN controller and the first SFF, so as to acquire, by means of the routing protocol, the second SF information published by the SDN controller; or,
establishing a routing neighbor between the SDN controller and a routing reflector, and establishing a routing neighbor between the first SFF and the routing reflector, so as to acquire, by means of the routing protocol, the second SF information published by the SDN controller.

3. The method according to claim 1, wherein the service chain orchestration information specifically comprises at least one of the following:
identification information of the service chain, a service type contained in the service chain, service function instance information contained in the service type, and entry information and exit information of a service function instance; or
wherein the service chain configuration information specifically comprises at least one of the following: a service path index and a service index,
wherein the service path index is used for indicating the object of the service chain; and the service index is used for indicating the service type contained in the service chain; or
wherein after the step of acquiring the first SF information according to the service chain configuration information, the method further comprises:
maintaining an SF corresponding to the first SF information by the local controller corresponding to the first SFF.

4. A service chain forwarding control method, which is applied to a software defined network, SDN, controller, wherein the method comprises:
acquiring (S202) first service function, SF, information and second SF information, and generating a second forwarding table entry according to the first SF information and the second SF information; and
issuing (S204) the second forwarding table entry to a second service function forwarder, SFF, to perform service chain forwarding control,
wherein the first SF information is used for indicating the information of an SF attached to a first SFF, and the second SF information is used for indicating the information of an SF attached to the second SFF; and the first SFF is an SFF controlled by a local controller, and the second SFF is an SFF controlled by a software defined network (SDN) controller;
wherein the step of acquiring (S202) the first SF information and the second SF information comprises:
acquiring, by means of a routing protocol, the first SF information published by the first SFF;
wherein the step of acquiring, by means of the routing protocol, the first SF information published by the first SFF comprises:
establishing a routing neighbor between the SDN controller and the first SFF, so as to acquire, by means of the routing protocol, the first SF information published by the first SFF; or,
establishing a routing neighbor between the SDN controller and a routing reflector, and establishing a routing neighbor between the first SFF and the routing reflector, so as to acquire, by means of the routing protocol, the first SF information published by the first SFF.

5. The method according to claim 4, wherein before the step of acquiring the first SF information and the second SF information, the method further comprises:
generating service chain configuration information according to preset service chain orchestration information, and sending the service chain configuration information to the first SFF, so that the first SFF generates the first SF information according to the service chain configuration information;
wherein the step of sending the service chain configuration information to the first SFF comprises:
establishing a connection between the SDN controller and the first SFF, so as to issue the service chain configuration information to the first SFF; or,
establishing a routing neighbor between the SDN controller and the first SFF, so as to issue, by means of the routing protocol, the service chain configuration information to the first SFF; or,
establishing a routing neighbor between the SDN controller and the routing reflector, and establishing a routing neighbor between the first SFF and the routing reflector, so as to issue, by means of the routing protocol, the service chain configuration information to the first SFF.

6. The method according to claim 4, wherein the step of acquiring the first SF information and the second SF information further comprises:
establishing a connection between the SDN controller and the second SFF, so as to acquire the second SF information by means of a preset interaction protocol that runs between the SDN controller and the second SFF;
wherein after the step of acquiring the second SF information by means of the preset interaction protocol that runs between the SDN controller and the second SFF, the method further comprises:
maintaining an SF corresponding to the second SF information.

7. A service chain forwarding control method, which is applied to a second service function forwarder, SFF, wherein the second SFF is an SFF controlled by a software defined network, SDN, controller, and the method comprises:
performing (S302) service chain forwarding control according to a second forwarding table entry issued by the SDN controller,
wherein the second forwarding table entry is generated by the SDN controller according to first SF information and second SF information acquired by the SDN controller; the first SF information is used for indicating the information of an SF attached to a first SFF, and the second SF information is used for indicating the information of an SF attached to a second SFF; and the first SFF is an SFF controlled by a local controller;
acquiring, by the SDN controller and by means of a routing protocol, the first SF information published by the first SFF;
wherein the step of acquiring, by the SDN controller and by means of the routing protocol, the first SF information published by the first SFF comprises:
establishing a routing neighbor between the SDN controller and the first SFF, so that the SDN controller acquires, by means of the routing protocol, the first SF information published by the first SFF; or,
establishing a routing neighbor between the SDN controller and a routing reflector, and establishing a routing neighbor between the first SFF and the routing reflector, so that the SDN controller acquires, by means of the routing protocol, the first SF information published by the first SFF.

8. The method according to claim 7, wherein the method further comprises:
generating, by the SDN controller, service chain configuration information according to preset service chain orchestration information, and sending the service chain configuration information to the first SFF, so that the first SFF generates the first SF information according to the service chain configuration information;
wherein the step of sending the service chain configuration information to the first SFF comprises:
establishing a connection between the SDN controller and the first SFF, so as to issue the service chain configuration information to the first SFF; or,
establishing a routing neighbor between the SDN controller and the first SFF, so as to issue, by means of the routing protocol, the service chain configuration information to the first SFF; or,
establishing a routing neighbor between the SDN controller and the routing reflector, and establishing a routing neighbor between the first SFF and the routing reflector, so as to issue, by means of the routing protocol, the service chain configuration information to the first SFF.

9. The method according to claim 7, wherein the method further comprises:
establishing a connection between the SDN controller and the second SFF, so that the SDN controller acquires the second SF information by means of a preset interaction protocol that runs between the SDN controller and the second SFF;
wherein after the SDN controller acquires the second SF information by means of the preset interaction protocol that runs between the SDN controller and the second SFF, the method further comprises:
maintaining, by the SDN controller, an SF corresponding to the second SF information.

10. A service chain forwarding control apparatus, which is applied to a first service function forwarder, SFF), wherein the first SFF is an SFF controlled by a local controller; and the apparatus comprises:
a first acquisition module (502), configured to acquire first service function, SF, information and second SF information, and generate a first forwarding table entry according to the first SF information and the second SF information; and
a first control module (504), configured to perform service chain forwarding control on the first SFF according to the first forwarding table entry,
wherein the first SF information is used for indicating the information of an SF attached to the first SFF, and the second SF information is used for indicating the information of an SF attached to a second SFF; and the second SFF is an SFF controlled by a software defined network, SDN, controller;
wherein the first acquisition module (502) is further configured to acquire service chain configuration information sent by the SDN controller, so as to acquire the first SF information according to the service chain configuration information, wherein the service chain configuration information is generated by the SDN controller according to preset service chain orchestration information;
wherein the first acquisition module (502) is further configured to:
establish a management connection between the SDN controller and the first SFF, so as to acquire the service chain configuration information issued by the SDN controller; or,
establish a routing neighbor between the SDN controller and the first SFF, so as to acquire, by means of the routing protocol, the service chain configuration information issued by the SDN controller; or,
establish a routing neighbor between the SDN controller and the routing reflector, and establish a routing neighbor between the first SFF and the routing reflector, so as to acquire, by means of the routing protocol, the service chain configuration information issued by the SDN controller.

11. A service chain forwarding control apparatus, which is applied to an SDN controller, wherein the apparatus comprises:
a second acquisition module (602), configured to acquire first service function, SF, information and second SF information, and generate a second forwarding table entry according to the first SF information and the second SF information; and
an issuing module (604), configured to issue the second forwarding table entry to a second service function forwarder, SFF, to perform service chain forwarding control,
wherein the first SF information is used for indicating the information of an SF attached to a first SFF, and the second SF information is used for indicating the information of an SF attached to the second SFF; and the first SFF is an SFF controlled by a local controller, and the second SFF is an SFF controlled by a software defined network, SDN, controller;
the second acquisition module (602) is configured to acquire, by means of a routing protocol, the first SF information published by the first SFF;
the second acquisition module (602) is configured to establish a routing neighbor between the SDN controller and the first SFF, so as to acquire, by means of the routing protocol, the first SF information published by the first SFF; or, establish a routing neighbor between the SDN controller and a routing reflector, and establish a routing neighbor between the first SFF and the routing reflector, so as to acquire, by means of the routing protocol, the first SF information published by the first SFF.

12. A service chain forwarding control apparatus, which is applied to a second service function forwarder, SFF, wherein the second SFF is an SFF controlled by a software defined network, SDN, controller; and the apparatus comprises:
a second control module (702), configured to perform service chain forwarding control according to a second forwarding table entry issued by the SDN controller,
wherein the second forwarding table entry is generated by the SDN controller according to first SF information and second SF information acquired by the SDN controller; the first SF information is used for indicating the information of an SF attached to a first SFF, and the second SF information is used for indicating the information of an SF attached to the second SFF; and the first SFF is an SFF controlled by a local controller;
the second control module (702) is configured to acquire, by the SDN controller and by means of a routing protocol, the first SF information published by the first SFF;
the second control module (702) is configured to establish a routing neighbor between the SDN controller and the first SFF, so that the SDN controller acquires, by means of the routing protocol, the first SF information published by the first SFF; or, establish a routing neighbor between the SDN controller and a routing reflector, and establish a routing neighbor between the first SFF and the routing reflector, so that the SDN controller acquires, by means of the routing protocol, the first SF information published by the first SFF.

## Patentansprüche

1. Verfahren zum Steuern der Weiterleitung einer Dienstkette, das auf einen ersten Dienstfunktionsweiterleiter, SFF, angewendet wird, wobei der erste SFF ein von einer lokalen Steuereinheit gesteuerter SFF ist; und das Verfahren umfassend:
Erfassen (S102) einer ersten Dienstfunktionsweiterleitungsinformation, SF, und einer zweiten SF-Information und Erzeugen eines ersten Weiterleitungstabelleneintrags nach der ersten SF-Information und der zweiten SF-Information; und Durchführen (S104) einer Dienstkettenweiterleitungssteuerung auf dem ersten SFF nach dem ersten W eiterleitungstabelleneintrag,
wobei die erste SF-Information dazu verwendet wird, die Information einer an die erste SFF angeschlossenen SF anzuzeigen, und die zweite SF-Information dazu verwendet wird, die Information einer an eine zweite SFF angeschlossenen SF anzuzeigen; und die zweite SFF eine SFF ist, die von einer Steuereinheit für ein softwaredefiniertes Netz, SDN, gesteuert wird;
wobei der Schritt des Erfassens der ersten Dienstfunktion, SF, Information und der zweiten SF Information ferner umfasst:
Erfassen von von der SDN-Steuereinheit gesendeten Dienstketten-Konfigurationsinformationen, um die ersten SF-Informationen gemäß den Dienstketten-Konfigurationsinformationen zu erfassen, wobei die Dienstketten-Konfigurationsinformationen von der SDN-Steuereinheit gemäß voreingestellten Dienstketten-Orchestrierungsinformationen erzeugt werden;
wobei der Schritt des Erfassens der von der SDN-Steuereinheit gesendeten Dienstketten-Konfigurationsinformationen umfasst:
Herstellen einer Managementverbindung zwischen der SDN-Steuereinheit und der ersten SFF, um die von der SDN-Steuereinheit ausgegebenen Dienstketten-Konfigurationsinformationen zu beziehen; oder,
Herstellen eines Routing-Nachbarn zwischen der SDN-Steuereinheit und der ersten SFF, um mittels des Routing-Protokolls die von der SDN-Steuereinheit ausgegebenen Dienstketten-Konfigurationsinformationen zu beziehen; oder,
Herstellen eines Routing-Nachbarn zwischen der SDN-Steuereinheit und dem Routing-Reflektor und Herstellen eines Routing-Nachbarn zwischen der ersten SFF und dem Routing-Reflektor, um mit Hilfe des Routing-Protokolls die von der SDN-Steuereinheit ausgegebenen Dienstketten-Konfigurationsinformationen zu beziehen.

2. Verfahren nach Anspruch 1, wobei der Schritt des Erfassens (S102) der ersten SF-Informationen und der zweiten SF-Informationen umfasst:
Erfassen der zweiten SF-Information, die von der Steuereinheit SDN veröffentlicht wurde, mittels eines Routing-Protokolls;
wobei der Schritt des Erfassens der zweiten SF-Informationen, die von der SDN-Steuereinheit veröffentlicht wurden, mittels des Routing-Protokolls umfasst:
Herstellen eines Routing-Nachbarn zwischen der SDN-Steuereinheit und der ersten SFF, um mittels des Routing-Protokolls die von der SDN-Steuereinheit veröffentlichten zweiten SF-Informationen zu erfassen; oder,
Herstellen eines Routing-Nachbarn zwischen der SDN-Steuereinheit und einem Routing-Reflektor und Herstellen eines Routing-Nachbarn zwischen der ersten SFF und dem Routing-Reflektor, um mittels des Routing-Protokolls die von der SDN-Steuereinheit veröffentlichten zweiten SF-Informationen zu erfassen.

3. Verfahren nach Anspruch 1, wobei die Dienstketten-Orchestrierungsinformationen insbesondere mindestens eines der Folgenden umfassen:
Identifikationsinformationen der Dienstkette, einen in der Dienstkette enthaltenen Diensttyp, in dem Diensttyp enthaltene Informationen über eine Dienstfunktionsinstanz sowie Eingangs- und Ausgangsinformationen einer Dienstfunktionsinstanz; oder
wobei die Dienstketten-Konfigurationsinformation insbesondere mindestens eines der folgenden umfasst: einen Dienstwegindex und einen Dienstindex,
wobei der Dienstwegindex zur Anzeige des Ziels der Dienstkette verwendet wird; und der Dienstindex zur Anzeige des in der Dienstkette enthaltenen Typs verwendet wird; oder
wobei das Verfahren nach dem Schritt des Erfassens der ersten SF-Information gemäß der Dienstketten-Konfigurationsinformation ferner umfasst:
Aufrechterhalten einer SF, die der ersten SF-Information entspricht, durch die lokale Steuereinheit, die der ersten SFF entspricht.

4. Verfahren zum Steuern der Weiterleitung einer Dienstkette, das auf eine Steuereinheit für ein softwaredefiniertes Netz, SDN, angewendet wird, wobei das Verfahren umfasst:
Erfassen (S202) von ersten Dienstfunktions-, SF-, Informationen und zweiten SF-Informationen, und Erzeugen eines zweiten Weiterleitungstabelleneintrags gemäß den ersten SF-Informationen und den zweiten SF-Informationen; und
Ausgeben (S204) des zweiten Weiterleitungstabelleneintrags an einen zweiten Dienstfunktionsweiterleiter, SFF, um eine Dienstkettenweiterleitungssteuerung durchzuführen,
wobei die erste SF-Information zur Anzeige der Information einer SF verwendet wird, die an eine erste SFF angeschlossen ist, und die zweite SF-Information zur Anzeige der Information einer SF verwendet wird, die an die zweite SFF angeschlossen ist; und die erste SFF eine SFF ist, die von einer lokalen Steuereinheit gesteuert wird, und die zweite SFF eine SFF ist, die von einer Steuereinheit für ein softwaredefiniertes Netz (SDN) gesteuert wird;
wobei der Schritt des Erfassens (S202) der ersten SF-Informationen und der zweiten SF-Informationen umfasst:
Erfassen, mittels eines Routing-Protokolls, der ersten SF-Informationen, die von der ersten SFF veröffentlicht wurden;
wobei der Schritt des Erfassens der ersten SF-Informationen, die von der ersten SFF veröffentlicht wurden, mittels des Routing-Protokolls umfasst:
Herstellen eines Routing-Nachbarn zwischen der SDN-Steuereinheit und der ersten SFF, um mittels des Routing-Protokolls die von der ersten SFF veröffentlichten ersten SF-Informationen zu erfassen; oder,
Herstellen eines Routing-Nachbarn zwischen der SDN-Steuereinheit und einem Routing-Reflektor und Herstellen eines Routing-Nachbarn zwischen der ersten SFF und dem Routing-Reflektor, um mit Hilfe des Routing-Protokolls die von der ersten SFF veröffentlichten ersten SF-Informationen zu beziehen.

5. Verfahren nach Anspruch 4, wobei das Verfahren vor dem Schritt des Erfassens der ersten SF-Informationen und der zweiten SF-Informationen ferner umfasst:
Erzeugen von Dienstketten-Konfigurationsinformationen gemäß voreingestellten Dienstketten-Orchestrierungsinformationen und Senden der Dienstketten-Konfigurationsinformationen an die erste SFF, sodass die erste SFF die ersten SF-Informationen gemäß den Dienstketten-Konfigurationsinformationen erzeugt;
wobei der Schritt des Sendens der Dienstketten-Konfigurationsinformationen an die erste SFF umfasst:
Herstellen einer Verbindung zwischen der SDN-Steuereinheit und dem ersten SFF, um die Dienstketten-Konfigurationsinformationen an das erste SFF auszugeben; oder,
Herstellen eines Routing-Nachbarn zwischen der SDN-Steuereinheit und dem ersten SFF, um mittels des Routing-Protokolls die Dienstketten-Konfigurationsinformationen an das erste SFF auszugeben; oder,
Herstellen eines Routing-Nachbarn zwischen der SDN-Steuereinheit und dem Routing-Reflektor und Herstellen eines Routing-Nachbarn zwischen der ersten SFF und dem Routing-Reflektor, um mittels des Routing-Protokolls die Dienstketten-Konfigurationsinformationen an die erste SFF auszugeben.

6. Verfahren nach Anspruch 4, wobei der Schritt des Erfassens der ersten SF-Informationen und der zweiten SF-Informationen ferner umfasst:
Herstellen einer Verbindung zwischen der SDN-Steuereinheit und der zweiten SFF, um die zweite SF-Information mittels eines voreingestellten Interaktionsprotokolls zu erfassen, das zwischen der SDN-Steuereinheit und der zweiten SFF ausgeführt wird;
wobei das Verfahren nach dem Schritt des Erfassens der zweiten SF-Information mittels des voreingestellten Interaktionsprotokolls, das zwischen der SDN-Steuereinheit und der zweiten SFF ausgeführt wird, ferner umfasst:
Aufrechterhalten einer SF, die der zweiten SF-Information entspricht.

7. Verfahren zum Steuern der Weiterleitung einer Dienstkette, das auf einen zweiten Dienstfunktionsweiterleiter, SFF, angewendet wird, wobei der zweite SFF ein SFF ist, das von einer Steuereinheit für ein softwaredefiniertes Netz, SDN, gesteuert wird, und das Verfahren umfasst:
Durchführen (S302) der Dienstkettenweiterleitungssteuerung gemäß einem zweiten Weiterleitungstabelleneintrag, der von der SDN-Steuereinheit ausgegeben wird,
wobei der zweite Weiterleitungstabelleneintrag von der SDN-Steuereinheit gemäß einer ersten SF-Information und einer zweiten SF-Information, die von der SDN-Steuereinheit erfasst werden, erzeugt wird; die erste SF-Information zur Anzeige der Information einer an eine erste SFF angeschlossenen SF verwendet wird und die zweite SF-Information zur Anzeige der Information einer an eine zweite SFF angeschlossenen SF verwendet wird; und die erste SFF eine von einer lokalen Steuereinheit gesteuerte SFF ist;
Erfassen der ersten SF-Information, die von der ersten SFF veröffentlicht wurde, durch die SDN-Steuereinheit und mittels eines Routing-Protokolls;
wobei der Schritt des Erfassens der von der ersten SFF veröffentlichten ersten SF-Informationen durch die SDN-Steuereinheit und mittels des Routing-Protokolls umfasst:
Herstellen eines Routing-Nachbarn zwischen der SDN-Steuereinheit und der ersten SFF, sodass die SDN-Steuereinheit mittels des Routing-Protokolls die erste SF-Information, die von der ersten SFF veröffentlicht wurde, bezieht; oder,
Herstellen eines Routing-Nachbarn zwischen der Steuereinheit und einem Routing-Reflektor und Herstellen eines Routing-Nachbarn zwischen der ersten SFF und dem Routing-Reflektor, sodass die SDN-Steuereinheit mittels des Routing-Protokolls die ersten SF-Informationen, die von der ersten SFF veröffentlicht wurden, bezieht.

8. Verfahren nach Anspruch 7, wobei das Verfahren ferner umfasst:
Erzeugen von Dienstketten-Konfigurationsinformationen durch die SDN-Steuereinheit gemäß voreingestellten Dienstketten-Orchestrierungsinformationen und Senden der Dienstketten-Konfigurationsinformationen an die erste SFF, sodass die erste SFF die ersten SF-Informationen gemäß den Dienstketten-Konfigurationsinformationen erzeugt;
wobei der Schritt des Sendens der Dienstketten-Konfigurationsinformationen an die erste SFF Folgendes umfasst:
Herstellen einer Verbindung zwischen der SDN-Steuereinheit und dem ersten SFF, um die Dienstketten-Konfigurationsinformationen an das erste SFF auszugeben; oder,
Herstellen eines Routing-Nachbarn zwischen der SDN-Steuereinheit und dem ersten SFF, um mittels des Routing-Protokolls die Dienstketten-Konfigurationsinformationen an das erste SFF auszugeben; oder,
Herstellen eines Routing-Nachbarn zwischen der SDN-Steuereinheit und dem Routing-Reflektor und Herstellen eines Routing-Nachbarn zwischen der ersten SFF und dem Routing-Reflektor, um mittels des Routing-Protokolls die Dienstketten-Konfigurationsinformationen an die erste SFF auszugeben.

9. Verfahren nach Anspruch 7, wobei das Verfahren ferner umfasst:
Herstellen einer Verbindung zwischen der SDN-Steuereinheit und der zweiten SFF, sodass die SDN-Steuereinheit die zweite SF-Information mittels eines voreingestellten Interaktionsprotokolls erfasst, das zwischen der SDN-Steuereinheit und der zweiten SFF ausgeführt wird;
wobei nachdem die SDN-Steuereinheit die zweite SF-Information mittels des voreingestellten Interaktionsprotokolls, das zwischen der SDN-Steuereinheit und dem zweiten SFF ausgeführt wird, bezogen hat, das Verfahren ferner umfasst:
Aufrechterhalten einer SF, die der zweiten SF-Informationen entspricht, durch die SDN-Steuereinheit.

10. Gerät zum Steuern der Weiterleitung einer Dienstkette, das auf einen ersten Dienstfunktionsweiterleiter, SFF, angewendet wird, wobei der erste SFF ein von einer lokalen Steuereinheit gesteuerter SFF ist; und das Gerät umfasst:
ein erstes Erfassungsmodul (502), das so konfiguriert ist, dass es erste Dienstfunktions-, SF-, Informationen und zweite SF-Informationen erfasst und einen ersten Weiterleitungstabelleneintrag gemäß den ersten SF-Informationen und den zweiten SF-Informationen erzeugt; und
ein erstes Steuermodul (504), das so konfiguriert ist, dass es eine Dienstkettenweiterleitungssteuerung auf der ersten SFF gemäß dem ersten Weiterleitungstabelleneintrag durchführt,
wobei die erste SF-Information dazu verwendet wird, die Information einer an die erste SFF angeschlossenen SF anzuzeigen, und die zweite SF-Information dazu verwendet wird, die Information einer an eine zweite SFF angeschlossenen SF anzuzeigen; und die zweite SFF eine SFF ist, die von einer Steuereinheit für ein softwaredefiniertes Netz, SDN, gesteuert wird;
wobei das erste Erfassungsmodul (502) ferner so konfiguriert ist, dass es von der SDN-Steuereinheit gesendete Dienstketten-Konfigurationsinformationen erfasst, um die ersten SF-Informationen gemäß den Dienstketten-Konfigurationsinformationen zu erfassen, wobei die Dienstketten-Konfigurationsinformationen von der SDN-Steuereinheit gemäß voreingestellten Dienstketten-Orchestrierungsinformationen erzeugt werden;
wobei das erste Erfassungsmodul (502) ferner konfiguriert ist zum:
Herstellen einer Managementverbindung zwischen der SDN-Steuereinheit und der ersten SFF, um die von der SDN-Steuereinheit ausgegebenen Dienstketten-Konfigurationsinformationen zu beziehen; oder,
Herstellen eines Routing-Nachbarn zwischen der SDN-Steuereinheit und der ersten SFF, um mittels des Routing-Protokolls die von der SDN-Steuereinheit ausgegebenen Dienstketten-Konfigurationsinformationen zu beziehen; oder,
Herstellen eines Routing-Nachbarn zwischen der SDN-Steuereinheit und dem Routing-Reflektor und Herstellen eines Routing-Nachbarn zwischen der ersten SFF und dem Routing-Reflektor, um mit Hilfe des Routing-Protokolls die von der SDN-Steuereinheit ausgegebenen Dienstketten-Konfigurationsinformationen zu beziehen.

11. Dienstketten-Weiterleitungssteuerungsgerät, das auf eine SDN-Steuereinheit angewendet wird, wobei das Gerät umfasst:
ein zweites Erfassungsmodul (602), das so konfiguriert ist, dass es erste Dienstfunktions-, SF-, Informationen und zweite SF-Informationen erfasst und einen zweiten Weiterleitungstabelleneintrag gemäß den ersten SF-Informationen und den zweiten SF-Informationen erzeugt; und
ein Ausgabemodul (604), das so konfiguriert ist, dass es den zweiten Weiterleitungstabelleneintrag an einen zweiten Dienstfunktionsweiterleiter, SFF, ausgibt, um eine Dienstkettenweiterleitungssteuerung durchzuführen,
wobei die erste SF-Information zur Anzeige der Information einer SF verwendet wird, die an eine erste SFF angeschlossen ist, und die zweite SF-Information zur Anzeige der Information einer SF verwendet wird, die an die zweite SFF angeschlossen ist; und die erste SFF eine SFF ist, die von einer lokalen Steuereinheit gesteuert wird, und die zweite SFF eine SFF ist, die von einer Software-definierten Netz, SDN, Steuereinheit gesteuert wird;
das zweite Erfassungsmodul (602) so konfiguriert ist, dass es mittels eines Routing-Protokolls die von der ersten SFF veröffentlichten ersten SF-Informationen erfasst;
das zweite Erfassungsmodul (602) so konfiguriert ist, dass es einen Routing-Nachbarn zwischen der SDN-Steuereinheit und dem ersten SFF herstellt, um mit Hilfe des Routing-Protokolls die vom ersten SFF veröffentlichten ersten SF-Informationen zu erfassen; oder einen Routing-Nachbarn zwischen der SDN-Steuereinheit und einem Routing-Reflektor herstellt und einen Routing-Nachbarn zwischen dem ersten SFF und dem Routing-Reflektor herstellt, um mit Hilfe des Routing-Protokolls die vom ersten SFF veröffentlichten ersten SF-Informationen zu erfassen.

12. Gerät zum Steuern der Weiterleitung einer Dienstkette, das auf einen zweiten Dienstfunktionsweiterleiter, SFF, angewendet wird, wobei der zweite SFF ein SFF ist, das von einer Steuereinheit für ein softwaredefiniertes Netz, SDN, gesteuert wird, und das Gerät umfasst:
ein zweites Steuermodul (702), das so konfiguriert ist, dass es die Weiterleitungssteuerung der Dienstkette gemäß einem von der SDN-Steuereinheit ausgegebenen zweiten Weiterleitungstabelleneintrag durchführt,
wobei der zweite Weiterleitungstabelleneintrag von der SDN-Steuereinheit gemäß einer ersten SF-Information und einer zweiten SF-Information, die von der SDN-Steuereinheit erfasst werden, erzeugt wird; die erste SF-Information zur Anzeige der Information einer an eine erste SFF angeschlossenen SF verwendet wird und die zweite SF-Information zur Anzeige der Information einer an die zweite SFF angeschlossenen SF verwendet wird; und die erste SFF eine von einer lokalen Steuereinheit gesteuerte SFF ist;
das zweite Steuermodul (702) so konfiguriert ist, dass es durch die SDN-Steuereinheit und mittels eines Routing-Protokolls die von der ersten SFF veröffentlichten ersten SF-Informationen erfasst;
das zweite Steuermodul (702) so konfiguriert ist, dass es einen Routing-Nachbarn zwischen der SDN-Steuereinheit und der ersten SFF herstellt, sodass die SDN-Steuereinheit mittels des Routing-Protokolls die von der ersten SFF veröffentlichten ersten SF-Informationen erwirbt; oder dass es einen Routing-Nachbarn zwischen der SDN-Steuereinheit und einem Routing-Reflektor herstellt und einen Routing-Nachbarn zwischen der ersten SFF und dem Routing-Reflektor herstellt, sodass die SDN-Steuereinheit mittels des Routing-Protokolls die von der ersten SFF veröffentlichten ersten SF-Informationen erwirbt.

## Revendications

1. Procédé de commande d'acheminement de chaîne de service, lequel est appliqué à un premier porteur de fonction de service, SFF, le premier SFF étant un SFF commandé par un dispositif de commande local ; et ledit procédé comprenant :
l'acquisition (S 102) de premières informations de fonction de service, SF, et de secondes informations de SF et la génération d'une première entrée de table d'acheminement en fonction des premières informations de SF et en fonction des secondes informations de SF ; et la réalisation (S104) d'une commande d'acheminement de chaîne de service sur le premier SFF en fonction de la première entrée de table d'acheminement,
dans lequel les premières informations de SF sont utilisées pour indiquer les informations d'un SF fixé au premier SFF et les secondes informations de SF sont utilisées pour indiquer les informations d'un SF fixé à un second SFF ; et le second SFF étant un SFF commandé par un dispositif de commande de réseau défini par logiciel, SDN ;
dans lequel l'étape d'acquisition des premières informations de fonction de service, SF, et des secondes informations de SF comprennent en outre :
l'acquisition des informations de configuration de chaîne de service envoyées par le dispositif de commande de SDN, de manière à acquérir les premières informations de SF en fonction des informations de configuration de chaîne de service, dans lequel les informations de configuration de chaîne de service sont générées par le dispositif de commande de SDN en fonction des informations prédéfinies d'orchestration de chaîne de service ;
dans lequel l'étape d'acquisition des informations de configuration de chaîne de service envoyées par le dispositif de commande de SDN comprend :
l'établissement d'une connexion de gestion entre le dispositif de commande de SDN et le premier SFF, de manière à acquérir les informations de configuration de chaîne de service émises par le dispositif de commande de SDN ; ou,
l'établissement d'un voisin de routage entre le dispositif de commande de SDN et le premier SFF, de manière à acquérir, par le protocole de routage, les informations de configuration de chaîne de service émises par le dispositif de commande de SDN ; ou,
l'établissement d'un voisin de routage entre le dispositif de commande de SDN et le réflecteur de routage et l'établissement d'un voisin de routage entre le premier SFF et le réflecteur de routage, de manière à acquérir, au moyen du protocole de routage, les informations de configuration de chaîne de service émises par le dispositif de commande de SDN.

2. Procédé selon la revendication 1, dans lequel l'étape d'acquisition (S 102) des premières et des secondes informations de SF comprend :
l'acquisition, au moyen d'un protocole de routage, des secondes informations de SF publiées par le dispositif de commande de SDN ;
dans lequel l'étape d'acquisition, au moyen du protocole de routage, des secondes informations de SF publiées par le dispositif de commande de SDN comprend :
l'établissement d'un voisin de routage entre le dispositif de commande de SDN et le premier SFF, de manière à acquérir, au moyen du protocole de routage, les secondes informations de SF publiées par le dispositif de commande de SDN ; ou,
l'établissement d'un voisin de routage entre le dispositif de commande de SDN et un réflecteur de routage et l'établissement d'un voisin de routage entre le premier SFF et le réflecteur de routage, de manière à acquérir, au moyen du protocole de routage, les secondes informations de SF publiées par le dispositif de commande de SDN.

3. Procédé selon la revendication 1, dans lequel les informations d'orchestration de chaîne de service comprennent spécifiquement au moins l'un des éléments suivants :
des informations d'identification de la chaîne de service, un type de service contenu dans la chaîne de service, des informations d'instance de fonction de service contenues dans le type de service et des informations d'entrée et des informations de sortie d'une instance de fonction de service ; ou
dans lequel les informations de configuration de chaîne de service comprennent spécifiquement au moins l'un des éléments suivants : un index de chemin de service et un index de service,
dans lequel l'index de chemin de service est utilisé pour indiquer l'objet de la chaîne de service ; et l'index de service est utilisé pour indiquer le type de service contenu dans la chaîne de service ; ou
dans lequel après l'étape d'acquisition des premières informations de SF en fonction des informations de configuration de chaîne de service, ledit procédé comprend en outre :
le maintien d'un SF correspondant aux premières informations de SF par le dispositif de commande local correspondant au premier SFF.

4. Procédé de commande d'acheminement de chaîne de service, lequel est appliqué à un dispositif de commande de réseau défini par logiciel, SDN, dans lequel ledit procédé comprend :
l'acquisition (S202) de premières informations de fonction de service, SF, et de secondes informations de SF et la génération d'une seconde entrée de table d'acheminement en fonction des premières et des secondes informations de SF ; et
l'émission (S204) de la seconde entrée de table d'acheminement à un second porteur de fonction de service, SFF, pour réaliser une commande d'acheminement de chaîne de service,
dans lequel les premières informations de SF sont utilisées pour indiquer les informations d'un SF fixé à un premier SFF et les secondes informations de SF sont utilisées pour indiquer les informations d'un SF fixé au second SFF ; et le premier SFF étant un SFF commandé par un dispositif de commande local et le second SFF un SFF commandé par un dispositif de commande de réseau défini par logiciel (SDN) ;
dans lequel l'étape d'acquisition (S202) des premières et des secondes informations de SF comprend :
l'acquisition, au moyen d'un protocole de routage, des premières informations de SF publiées par le premier SFF ;
dans lequel l'étape d'acquisition, au moyen du protocole de routage, des premières informations de SF publiées par le premier SFF comprend :
l'établissement d'un voisin de routage entre le dispositif de commande de SDN et le premier SFF, de manière à acquérir, au moyen du protocole de routage, les premières informations de SF publiées par le premier SFF ; ou,
l'établissement d'un voisin de routage entre le dispositif de commande de SDN et un réflecteur de routage et l'établissement d'un voisin de routage entre le premier SFF et le réflecteur de routage, de manière à acquérir, au moyen du protocole de routage, les premières informations de SF publiées par le premier SFF.

5. Procédé selon la revendication 4, dans lequel, avant l'étape d'acquisition des premières et secondes informations de SF, ledit procédé comprend :
la génération des informations de configuration de chaîne de service en fonction des informations prédéfinies d'orchestration de chaîne de service et l'envoi des informations de configuration de chaîne de service au premier SFF de telle sorte que le premier SFF génère les premières informations de SF en fonction des informations de configuration de chaîne de service ;
l'étape d'envoi des informations de configuration de chaîne de service au premier SFF comprenant :
l'établissement d'une connexion entre le dispositif de commande de SDN et le premier SFF, afin de transmettre les informations de configuration de chaîne de service au premier SFF ; ou,
l'établissement d'un voisin de routage entre le dispositif de commande de SDN et le premier SFF, afin de transmettre, par le protocole de routage, les informations de configuration de chaîne de service au premier SFF ; ou,
l'établissement d'un voisin de routage entre le dispositif de commande de SDN et le réflecteur de routage et l'établissement d'un voisin de routage entre le premier SFF et le réflecteur de routage, de manière à émettre, par le protocole de routage, les informations de configuration de chaîne de service au premier SFF.

6. Procédé selon la revendication 4, dans lequel l'étape d'acquisition des premières et secondes informations de SF comprend en outre :
l'établissement d'une connexion entre le dispositif de commande de SDN et le second SFF, de manière à acquérir les secondes informations de SF par un protocole prédéfini d'interaction exécuté entre le dispositif de commande de SDN et le second SFF ;
après l'étape d'acquisition des secondes informations de SF par le protocole prédéfini d'interaction exécuté entre le dispositif de commande de SDN et le second SFF, le procédé comprenant en outre :
le maintien d'un SF correspondant aux secondes informations de SF.

7. Procédé de commande d'acheminement de chaîne de service, appliqué à un second porteur de fonction de service, SFF, le second SFF étant un SFF commandé par un dispositif de commande de réseau défini par logiciel, SDN, et le procédé comprenant :
la réalisation (S302) d'une commande d'acheminement de chaîne de service selon une seconde entrée de table d'acheminement émise par le dispositif de commande de SDN,
la seconde entrée de table d'acheminement étant générée par le dispositif de commande de SDN en fonction des premières et des secondes informations de SF acquises par le dispositif de commande de SDN ; les premières informations de SF servant à indiquer les informations d'un SF fixé à un premier SFF et les secondes informations de SF servant à indiquer les informations d'un SF fixé à un second SFF ; et le premier SFF étant un SFF commandé par un dispositif de commande local ;
l'acquisition, par le dispositif de commande de SDN et par un protocole de routage, des premières informations de SF publiées par le premier SFF ;
l'étape d'acquisition, par le dispositif de commande de SDN et par le protocole de routage, des premières informations de SF publiées par le premier SFF comprenant :
l'établissement d'un voisin de routage entre le dispositif de commande de SDN et le premier SFF de telle sorte que le dispositif de commande de SDN acquière, au moyen du protocole de routage, les premières informations de SF publiées par le premier SFF ; ou,
l'établissement d'un voisin de routage entre le dispositif de commande de SDN et un réflecteur de routage et l'établissement d'un voisin de routage entre le premier SFF et le réflecteur de routage de telle sorte que le dispositif de commande de SDN acquière, au moyen du protocole de routage, les premières informations de SF publiées par le premier SFF.

8. Procédé selon la revendication 7, dans lequel ledit procédé comprend en outre :
la génération, au moyen du dispositif de commande de SDN, des informations de configuration de chaîne de service en fonction des informations prédéfinies d'orchestration de chaîne de service et l'envoi des informations de configuration de chaîne de service au premier SFF de telle sorte que le premier SFF génère les premières informations de SF en fonction des informations de configuration de chaîne de service ;
dans lequel l'étape d'envoi des informations de configuration de chaîne de service au premier SFF comprend :
l'établissement d'une connexion entre le dispositif de commande de SDN et le premier SFF, de manière à transmettre les informations de configuration de chaîne de service au premier SFF ; ou,
l'établissement d'un voisin de routage entre le dispositif de commande de SDN et le premier SFF, de manière à transmettre, au moyen du protocole de routage, les informations de configuration de chaîne de service au premier SFF ; ou,
l'établissement d'un voisin de routage entre le dispositif de commande de SDN et le réflecteur de routage et l'établissement d'un voisin de routage entre le premier SFF et le réflecteur de routage, de manière à émettre, au moyen du protocole de routage, les informations de configuration de chaîne de service au premier SFF.

9. Procédé selon la revendication 7, dans lequel ledit procédé comprend en outre :
l'établissement d'une connexion entre le dispositif de commande de SDN et le second SFF de telle sorte que le dispositif de commande de SDN acquière les secondes informations de SF au moyen d'un protocole prédéfini d'interaction, lequel est exécuté entre le dispositif de commande de SDN et le second SFF ;
dans lequel après l'acquisition, par le dispositif de commande de SDN, des secondes informations de SF au moyen du protocole prédéfini d'interaction, lequel est exécuté entre le dispositif de commande de SDN et le second SFF, ledit procédé comprend en outre :
le maintien, par le dispositif de commande de SDN, d'une SF correspondant aux secondes informations de SF.

10. Appareil de commande d'acheminement de chaîne de service, lequel est appliqué à un premier porteur de fonction de service, SFF, dans lequel le premier SFF est un SFF commandé par un dispositif de commande local ; et ledit appareil comprend :
un premier module d'acquisition (502), configuré pour acquérir une première fonction de service, SF, et des secondes informations de SF et pour générer une première entrée de table d'acheminement en fonction des premières et en fonction des secondes informations de SF ; et
un premier module de commande (504), configuré pour réaliser une commande d'acheminement de chaîne de service sur le premier SFF en fonction de la première entrée de table d'acheminement,
dans lequel les premières informations de SF sont utilisées pour indiquer les informations d'un SF fixé au premier SFF et les secondes informations de SF sont utilisées pour indiquer les informations d'un SF fixé à un second SFF ; et le second SFF étant un SFF commandé par un dispositif de commande de réseau défini par logiciel, SDN ;
dans lequel le premier module d'acquisition (502) est en outre configuré pour acquérir des informations de configuration de chaîne de service envoyées par le dispositif de commande de SDN, de manière à acquérir les premières informations de SF en fonction des informations de configuration de chaîne de service, dans lequel les informations de configuration de chaîne de service sont générées par le dispositif de commande de SDN en fonction des informations prédéfinies d'orchestration de chaîne de service ;
dans lequel le premier module d'acquisition (502) est en outre configuré :
pour établir une connexion de gestion entre le dispositif de commande de SDN et le premier SFF, de manière à acquérir les informations de configuration de chaîne de service émises par le dispositif de commande de SDN ; ou,
pour établir un voisin de routage entre le dispositif de commande de SDN et le premier SFF, de manière à acquérir, au moyen du protocole de routage, les informations de configuration de chaîne de service émises par le dispositif de commande de SDN ; ou,
pour établir un voisin de routage entre le dispositif de commande de SDN et le réflecteur de routage et pour établir un voisin de routage entre le premier SFF et le réflecteur de routage, de manière à acquérir, au moyen du protocole de routage, les informations de configuration de chaîne de service émises par le dispositif de commande de SDN.

11. Appareil de commande d'acheminement de chaîne de service, lequel est appliqué à un dispositif de commande de SDN, dans lequel ledit appareil comprend :
un second module d'acquisition (602), configuré pour acquérir une première fonction de service, des informations de SF, et des secondes informations de SF et pour générer une seconde entrée de table d'acheminement en fonction des premières et des secondes informations de SF ; et
un module d'émission (604), configuré pour émettre la seconde entrée de table d'acheminement à un second porteur de fonction de service, SFF, pour réaliser une commande d'acheminement de chaîne de service,
dans lequel les premières informations de SF sont utilisées pour indiquer les informations d'un SF fixé à un premier SFF et les secondes informations de SF sont utilisées pour indiquer les informations d'un SF fixé au second SFF ; et le premier SFF étant un SFF commandé par un dispositif de commande local et le second SFF étant un SFF commandé par un dispositif de commande de réseau défini par logiciel, SDN ;
le second module d'acquisition (602) étant configuré pour acquérir, au moyen d'un protocole de routage, les premières informations de SF publiées par le premier SFF ;
le second module d'acquisition (602) étant configuré pour établir un voisin de routage entre le dispositif de commande de SDN et le premier SFF, de manière à acquérir, au moyen du protocole de routage, les premières informations de SF publiées par le premier SFF ; ou pour établir un voisin de routage entre le dispositif de commande de SDN et un réflecteur de routage et pour établir un voisin de routage entre le premier SFF et le réflecteur de routage, de manière à acquérir, au moyen du protocole de routage, les premières informations de SF publiées par le premier SFF.

12. Appareil de commande d'acheminement de chaîne de service, lequel est appliqué à un second porteur de fonction de service, SFF, dans lequel le second SFF est un SFF commandé par un dispositif de commande de réseau défini par logiciel, SDN ; et l'appareil comprenant :
un second module de commande (702), configuré pour réaliser une commande d'acheminement de chaîne de service en fonction d'une seconde entrée de table d'acheminement émise par le dispositif de commande de SDN,
dans lequel la seconde entrée de table d'acheminement est générée par le dispositif de commande de SDN en fonction des premières et des secondes informations de SF acquises par le dispositif de commande de SDN ; les premières informations de SF étant utilisées pour indiquer les informations d'un SF fixé à un premier SFF et les secondes informations de SF étant utilisées pour indiquer les informations d'un SF fixé au second SFF ; et le premier SFF étant un SFF commandé par un dispositif de commande local ;
le second module de commande (702) étant configuré pour acquérir, par le dispositif de commande de SDN et au moyen d'un protocole de routage, les premières informations de SF publiées par le premier SFF ;
le second module de commande (702) étant configuré pour établir un voisin de routage entre le dispositif de commande de SDN et le premier SFF de telle sorte que le dispositif de commande de SDN acquière, au moyen du protocole de routage, les premières informations de SF publiées par le premier SFF ; ou pour établir un voisin de routage entre le dispositif de commande de SDN et un réflecteur de routage et pour établir un voisin de routage entre le premier SFF et le réflecteur de routage de telle sorte que le dispositif de commande de SDN acquière, au moyen du protocole de routage, les premières informations de SF publiées par le premier SFF.
